# EUROPÄISCHE PATENTSCHRIFT

(11) **EP 2 599 568 B1**
(45) Veröffentlichungstag und Bekanntmachung des Hinweises auf die Patenterteilung: **06.01.2016**
(21) Anmeldenummer: 12183418.8
(22) Anmeldetag: 07.09.2012
(51) Int. Cl.: B23B 45/00, B25B 21/00

(54) **Bohrvorrichtung**
Drilling device
Dispositif de forage

(30) Priorität: 30.11.2011 DE 102011055869
(43) Veröffentlichungstag der Anmeldung: 05.06.2013
(73) Patentinhaber: Röhm GmbH, 89567 Sontheim/Brenz (DE)
(72) Erfinder: Schenk, Peter, 89168 Niederstotzingen (DE); Nusser, Markus, 89441 Bächingen (DE)
(74) Vertreter: Hentrich Patentanwälte PartG mbB

(56) Entgegenhaltungen:
- EP-A1- 1 919 646
- EP-A2- 2 184 138
- DE-A1-102005 006 425
- US-A1- 2004 211 576
- US-A1- 2010 200 257

## Beschreibung

Die Erfindung betrifft eine Bohrvorrichtung mit einer Bohrmaschine, die ein Maschinengehäuse und eine mittels eines Motors antreibbare Maschinenspindel aufweist, und mit einem Bohrfutter mit einem Futterkörper, in dem mittels einer zwischen einem Mitnehmer und einer Gewindehülse ausgebildeten Gewindeverbindung verstellbare Spannbacken geführt sind, mit einer Bohrspindel und einem axial verstellbaren Antriebsbolzen, der durch den Motor auf seiner der Maschinenspindel zugewandten Seite über ein Planetengetriebe bestehend aus einem Sonnenrad, einem Planetenräder tragenden Planetenträger und einem Hohlrad antreibbar ist, und mit einem Stellglied, wobei das Hohlrad auf seiner der Maschinenspindel abgewandten Seite eine Stirnnocken aufweisende Stirnseite besitzt, zum Zusammenwirken mit mindestens einem Kupplungsbolzen, wobei außerdem ein Sperrglied und ein Spannglied parallel zur Kraftübertragungskette des Antriebsbolzens vorgesehen sind, welche drehfest mit dem Maschinengehäuse verbunden und durch Verstellung des Stellglieds zwischen den Betriebsmodi axial verstellbar sind, für die Variation des auf den Antriebsbolzen wirkenden Drehmoments. Eine solche Bohrvorrichtung ist aus der US 2010/0200 257 A1 bekannt.

Eine Bohrvorrichtung ist beispielsweise aus der DE 10 2011 002 331 bekannt. Die hier gezeigte Bohrvorrichtung kann zwischen den Betriebsmodi "Spannen / Lösen" und "Bohren" durch axiale Verstellung einer Antriebshülse umgeschaltet werden. Bei dieser Bohrvorrichtung wird die Kraft der Maschinenspindel auf das Sonnenrad des Planetengetriebes übertragen. Das Sonnenrad treibt die auf dem Planetenträger gelagerten Planetenräder an, die auf dem drehfest mit dem Maschinengehäuse verbundenen Hohlrad abrollen, wodurch der Planetenträger verdreht, also angetrieben wird, der seinerseits den Antriebsbolzen über die Antriebshülse antreibt. Die Übersetzung des Planetengetriebes ist dabei stets konstant. Damit ist der Nachteil verbunden, dass im Bohrvorgang und im Spannvorgang stets das gleiche Drehmoment am Antriebsbolzen anliegt.

Eine Bohrvorrichtung der eingangs genannten Art ist bereits in der US 2010 / 0 200 257 A1 beschrieben. Hierbei wird ein Schalter entlang der Längsachse der Bohrvorrichtung verschoben, um die Bohrvorrichtung in unterschiedlichen Modi, nämlich in einem "Spannmodus" einerseits und einem "Bohrmodus" andererseits zu betreiben. Dabei löst im "Bohrmodus" eine erste Rutschkupplung bei Überschreiten eines ersten Drehmoments und im "Spannmodus" eine zweite Rutschkupplung bei Überschreiten eines zweiten Drehmoments aus. Nachteilhaft an der Bohrvorrichtung erscheint jedoch, dass diese aufgrund der axial voneinander beabstandeten Rutschkupplungen über eine sehr große Baulänge verfügt.

Es ist daher die Aufgabe der Erfindung, eine Bohrvorrichtung der eingangs genannten Art bereitzustellen, die die eine kürzere Baulänge bei einer höheren Integration des Bohrfutters aufweist.

Diese Aufgabe wird mit der Erfindung dadurch gelöst, dass das Hohlrad zur drehmomentabhängig drehfesten Lagerung gegenüber dem Maschinengehäuse durch eine auf seiner der Maschinenspindel zugewandten Seite vorgesehene Hohlradfeder abgestützt ist.

Damit ist der Vorteil verbunden, dass das maximal wirkende Drehmoment in den Betriebsmodi "Schrauben" und / oder "Spannen / Lösen" gegenüber dem maximalen Drehmoment im Betriebsmodus "Bohren" herabgesetzt werden kann.

Besonders vorteilhaft ist dabei, wenn das Hohlrad mindestens eine Sperrstegaufnahme für mindestens einen Sperrsteg des Sperrglieds aufweist. Dieser Sperrsteg kann dazu genutzt werden, das Hohlrad mit dem Maschinengehäuse drehfest zu fixieren, womit dieses bei jedem wirkenden Drehmoment sich nicht gegenüber dem Maschinengehäuse verdrehen kann, wodurch das maximal mögliche Drehmoment auf den Antriebsbolzen und die Bohrspindel übertragen werden kann.

Es ist daher besonders günstig, dass im Betriebsmodus "Bohren" durch die axiale Verstellung des Sperrglieds zur drehfesten Lagerung des Hohlrades gegenüber dem Maschinengehäuse der mindestens eine Sperrsteg in die mindestens eine Sperrstegaufnahme des Hohlrades eingerückt ist. Die axiale Verstellung des Sperrglieds wird dabei zur Positionskontrolle des Sperrsteges genutzt.

Von Vorteil ist auch, wenn in den Betriebsmodi "Schrauben" und "Spannen / Lösen" durch die axiale Verstellung des Sperrglieds der mindestens eine Sperrsteg aus der mindestens einen Sperrstegaufnahme ausgerückt ist. So ist es möglich, dass das Hohlrad gegenüber dem Maschinengehäuse durch eine Rutschkupplung drehfest gehalten wird und nur bei Überschreiten eines vordefinierten Drehmoments sich dieses Hohlrad mit dem Planetenträger dreht und dadurch keine Kraft mehr auf den Antriebsbolzen übertragen wird.

Es ist daher erfindungswesentlich, dass das Hohlrad auf seiner der Maschinenspindel abgewandten Seite eine Stirnnocken aufweisende Stirnseite besitzt zum Zusammenwirken mit mindestens einem Kupplungsbolzen. Zur Realisierung der Rutschkupplung können diese Stirnnocken das Hohlrad gegen ein Verdrehen gegenüber dem Maschinengehäuse bis zu einem vorbestimmten Drehmoment sichern.

Desweiteren ist vorteilhaft, wenn der mindestens eine Kupplungsbolzen mit einer Drehmomentfeder beaufschlagt ist zur drehmomentabhängig drehfesten Lagerung des Hohlrades gegenüber dem Maschinengehäuse an die Stirnseite des Hohlrades angepresst ist. Eine drehmomentabhängig drehfeste Lagerung ist dabei die drehfeste Lagerung des Hohlrades gegenüber dem Maschinengehäuse bis zum Wirken eines vorgebbaren Drehmoments. Ist dieses vorgebbare Drehmoment überschritten, so weichen die Kupplungsbolzen gegen die Kraft der Drehmomentfeder zurück und das Hohlrad kann sich gegenüber dem Maschinengehäuse verdrehen, wodurch die Umdrehung des Antriebsbolzens gestoppt wird. Auch dadurch ist eine Ausführungform einer Rutschkupplung realisiert, die bei Überschreiten eines vorgebbaren Drehmoments das Hohlrad zu einer Verdrehung gegenüber dem Maschinengehäuse freigibt. Je nach Kompression der Drehmomentfeder ist ein höheres Drehmoment notwendig, um das Hohlrad aus seiner drehfesten Lagerung bezüglich des Maschinengehäuses zu lösen.

Es hat sich dabei als besonders günstig erwiesen, wenn mindestens eine Drehmomenthülse zur Einstellung der Kompression der Drehmomentfeder vorgesehen ist. Dies bietet eine einfache Möglichkeit, die Kompression der Drehmomentfeder durch den Benutzer vorzugeben. Dieser kann die Drehmomentfeder wenig komprimieren, um das maximal zulässige Drehmoment für den Betriebsmodus "Spannen / Lösen" gering zu halten. Er kann die Kompression der Drehmomentfeder im Betriebsmodus "Schrauben" gegenüber der Kompression im Betriebsmodus "Spannen / Lösen" verstärken, um beim Schraubvorgang ein höheres maximal zulässiges Drehmoment vorzugeben. Letztlich ist es für den Benutzer auch möglich, durch Verstellung der Drehmomenthülse die Drehmomentfeder komplett zu komprimieren, wodurch der mindestens eine Kupplungsbolzen dem mindestens einen Stirnnocken nicht mehr ausweichen und damit die drehfeste Verbindung des Hohlrades mit dem Maschinengehäuse nicht mehr aufheben kann, um das maximal mögliche Drehmoment für den Betriebsmodus "Bohren" bereitzustellen.

Besonders vorteilhaft ist dabei, wenn die Drehmomentfeder auf ihrer der Maschinenspindel abgewandten Seite durch einen mittels der Drehmomenthülse axial verstellbaren Federaufnahmering abgestützt ist. Dieser Federaufnahmering dient dabei einer ordnungsgemäßen Führung und Kompression, beziehungsweise Ausdehnung der Drehmomentfeder, vorzugsweise innerhalb der Drehmomenthülse.

Als bevorzugt hat es sich erwiesen, wenn das Stellglied eine der Durchführung des Antriebsbolzens dienende Stellgliedbolzendurchführung, mindestens ein mit mindestens einer am Sperrglied vorgesehenen Sperrgliedsteuerkurve wechselwirkendes Sperrsteuerglied und mindestens ein mit mindestens einer am Spannglied vorgesehenen Spanngliedsteuerkurve wechselwirkendes Spannsteuerglied aufweist. Dies stellt eine einfache Möglichkeit dar, das Stellglied sowohl zur axialen Betätigung des Spanngliedes und als auch des Sperrgliedes zu verwenden, nämlich über die Wechselwirkung der Sperrgliedsteuerkurve mit dem Sperrsteuerglied und der Wechselwirkung der Spanngliedsteuerkurve mit dem Spannsteuerglied.

Vorteilhaft ist dabei auch, wenn das mindestens eine Sperrsteuerglied gegenüber dem mindestens einen Spannsteuerglied radial in Bezug zum Antriebsbolzen versetzt ist. Hierdurch kann das Stellglied ringförmig und mit sehr geringen Abmessungen gebildet werden, wodurch die Bohrvorrichtung leicht und kompakt bleibt.

Weiterhin ist vorteilhaft, wenn das Spannglied eine der Durchführung des Antriebsbolzens dienende Spanngliedbolzendurchführung, eine eine Spanngliedaußenverzahnung aufweisende Spanngliedextension und mindestens ein Spanngliedführungsmittel aufweist. Das Spanngliedführungsmittel dient dabei der geführten axialen Verstellung des Spanngliedes innerhalb oder außerhalb des Sperrgliedes und der radialen Festlegung seiner Lage. Das Spannglied selbst wird dazu genutzt, um den Betriebsmodus "Spannen / Lösen" der Bohrvorrichtung herzustellen und im Spannmodus die Antriebshülse beziehungsweise die Bohrspindel radial zu halten.

Sinnvoll ist es auch, wenn das Sperrglied eine der Durchführung des Antriebsbolzens dienende Sperrgliedbolzendurchführung, mindestens eine Spanngliedführung und mindestens eine Sperrgliedlauffläche aufweist. Hierdurch kann das Spannglied betriebssicher in der Spanngliedführung gleiten, wobei die Sperrgliedlauffläche ein Verdrehen des Stellgliedes relativ zum Sperrglied ermöglicht.

Besonders bevorzugt ist dabei, wenn im Betriebsmodus "Spannen / Lösen" durch die axiale Verstellung des Spannglieds ein Formschluss zwischen dem Spannglied und der Bohrspindel wirksam und diese dadurch drehfest mit dem Maschinengehäuse verbunden ist, und wenn der Antriebsbolzen durch eine Mitnahme durch das Spannglied formschlüssig mit der Gewindehülse verbunden ist. Hierdurch ist eine Relativdrehung der Gewindehülse gegenüber der Bohrspindel möglich, welche durch das Spannglied drehfest mit dem Maschinengehäuse verbunden ist. Die Bohrspindel selbst ist drehfest mit dem Futterkörper verbunden, wodurch eine Relativdrehung der Gewindehülse auch gegenüber dem feststehenden Futterkörper möglich ist und damit der Mitnehmer bei Betätigung des Antriebsbolzens durch die Gewindeverbindung aus- bzw. einspindelt. Hierdurch schließen bzw. öffnen sich die in einem Konus des Futterkörpers geführten Spannbacken mittels der Mitnahme durch den Mitnehmer. In dieser Stellung ist das Sperrglied mit seinen Sperrstegen aus der Sperraufnahme des Hohlrades ausgerückt und ausschließlich die Kupplungsbolzen liegen an der Stirnseite des Hohlrades an.

Eine weitere besonders bevorzugte Ausführungsform sieht vor, dass im Betriebsmodus "Spannen / Lösen" durch die axiale Verstellung des Spannglieds ein Formschluss zwischen dem Spannglied und der Bohrspindel wirksam und diese dadurch drehfest mit dem Maschinengehäuse verbunden ist, dass der Antriebsbolzen durch eine Mitnahme durch das Spannglied formschlüssig mit der Gewindehülse verbunden ist, dass ein Feststellring zur axialen Lagesicherung des mindestens einen an der Stirnseite angepressten Kupplungsbolzens vorgesehen ist. In dieser Ausführungsform ist es nicht möglich, dass der mindestens eine Kupplungsbolzen bei Überschreiten eines vordefinierten Drehmomentes axial gegenüber den Stirnnocken zurückweicht, wodurch das Hohlrad rotatorisch gegenüber dem Maschinengehäuse freigegeben wäre. Die Kupplungsbolzen sind durch den Feststellring in ihrer an die Stirnseite des Hohlrades gepressten Lage fixiert. Bei Überschreiten eines vordefinierten Drehmomentes weicht hierbei das Hohlrad selbst axial gegen den Druck der Hohlradfeder zurück, nämlich in Richtung der Maschinenspindel, so dass durch die Federkraft der Hohlradfeder eine weitere Möglichkeit der Drehmomentenbegrenzung, und damit eine erfindungswesentliche Ausführungsform einer Rutschkupplung geschaffen ist. Hierbei ist es ebenfalls möglich, dass diese Hohlradfeder in ihrer Kompression variiert werden kann.

Sinnvoll ist es dabei, wenn die Hohlradfeder axial rückwärtig, nämlich auf der der Maschinenspindel zugewandten Seite, durch eine am

Maschinengehäuse ausgebildete Sicherungsschulter oder durch einen Sicherungsring abgestützt ist. Auch hierdurch ist die Betriebssicherheit der Bohrvorrichtung erhöht.

Darüber hinaus hat es sich aufgrund einer erleichterten Bedienung als besonders sinnvoll erwiesen, wenn das Stellglied mittels einer Modusstellhülse verstellbar ist.

Eine einfache Verstellung des Stellgliedes ist dadurch gekennzeichnet, dass die Modusstellhülse eine Innenverzahnung und das Stellglied eine Stellverzahnung aufweisen, welche über ein auf einer Lagerachse gelagerten Stellzahnrad in wechselwirkendem Eingriff stehen. Dadurch kann besonders leicht zwischen den einzelnen Betriebsmodi hin- und hergeschaltet werden.

Von Vorteil ist auch, wenn die Modusstellhülse eine Anzahl an der den Betriebsmodi entsprechenden Rastpositionen aufweist, in die mindestens ein am Maschinengehäuse abgestütztes Rastglied eingreifbar ist. Durch diese dadurch gebildete Rasteinrichtung ist gewährleistet, dass sich die Bohrvorrichtung nicht selbsttätig in einen anderen Betriebsmodus verstellt oder dies durch eine vom Benutzer ungewollte Berührung der Stellhülse geschieht.

Außerdem ist bevorzugt, wenn der Antriebsbolzen auf der der Maschinenspindel abgewandten Seite ein Stirnrad aufweist, welches vorzugsweise als Stirnverzahnung gebildet ist. Hierdurch ist es einfacher, den Formschluss des Antriebsbolzens mit den in der Kraftübertragungskette zu betreibenden Bauteilen herzustellen.

Um eine betriebssichere Verstellung des Antriebsbolzens in die einzelnen Betriebsmodi zu gewährleisten, hat es sich als bevorzugt gezeigt, wenn am Stirnrad ein mit einer Rückführfeder beaufschlagtes Rückführelement abgestützt ist.

Um insbesondere einen betriebssicheren Spann- bzw. Lösevorgang zu gewährleisten, hat es sich als bevorzugt gezeigt, wenn das Rückführelement eine Rückführverzahnung aufweist, die vorzugsweise im Betriebsmodus "Spannen/Lösen" drehfest mit der Gewindehülse verbunden und der Formschluss zur Spindelverzahnung aufgehoben ist.

Von Vorteil ist dabei auch, wenn die Rückführfeder an einem an der Gewindehülse ausgebildeten Rückführkragen abgestützt ist. Hierdurch kann die Rückführfeder positionssicher in der Bohrvorrichtung angeordnet werden und diese den Antriebsbolzen dadurch ordnungsgemäß axial rückwärtig, das heißt in Richtung der Maschinenspindel, zurückstellen.

Besonders vorteilhaft ist auch, wenn dem Antriebsbolzen ein der Mitnahme durch Verstellung des Spanngliedes dienender Mitnahmering zugeordnet ist. Hierdurch kann der Antriebsbolzen durch Betätigung des Stellgliedes über die axiale Verstellung des Spanngliedes mitgeführt werden.

Von Vorteil ist dabei auch, wenn der Antriebsbolzen eine Mitnahmeschulter und / oder eine Mitnahmerille aufweist. In einer solchen Mitnahmerille kann ein Mitnahmering positioniert werden, während die Mitnahmeschulter dazu dient, vo Spannglied beaufschlagt zu werden und diesen axial nach vorn in Richtung der Werkzeugaufnahme zu führen.

Um das Sperrglied und das Spannglied betriebssicher in ihre den jeweiligen Betriebsmodus realisierende Position zu verstellen, hat es sich als bevorzugt erwiesen, wenn das Sperrglied durch eine Sperrgliedfeder und / oder das Spannglied durch eine Spanngliedfeder beaufschlagt sind.

Weiterhin ist von Vorteil, wenn die Bohrspindel mehrteilig, vorzugsweise aus einer Maschinenhohlspindel und einer mit dieser drehfest verbundenen Antriebshülse gebildet ist. Dies erleichtert die Fertigung der das Bohrfutter antreibenden Bauteile, wobei auch die Montage des Bohrfutters erleichert ist.

Letztlich hat es sich als bevorzugt erwiesen, dass formschlüssig mit dem Planetenträger eine drehfest mit dem Antriebsbolzen verbundene Antriebsbuchse vorgesehen ist. Es kann ein Standard-Planetengetriebe seinen Einsatz finden, da der Planetenträger nicht gesondert mit einer Kontur gebildet werden muss, die einen drehfesten, aber axial freigebenden Formschluss mit dem Antriebsbolzen ausbildet.

Im folgenden wird die Erfindung an einem in der Zeichnung dargestellten Ausführungsbeispiel näher erläutert; es zeigen:
- Fig. 1: eine Explosionsansicht der erfindungsgemäßen Bohrvorrichtung, teils geschnitten gezeigt,
- Fig. 2: eine weitere Explosionsansicht nach Figur 1,
- Fig. 3: das Details I aus Figur 1,
- Fig. 4: das Detail II aus Figur 2,
- Fig. 5: Detail I zusammengesetzt im Betriebsmodus "Bohren", ergänzt durch die Antriebshülse,
- Fig. 6: Detail I zusammengesetzt im Betriebsmodus "Schrauben", ergänzt durch die Antriebshülse,
- Fig. 7: Detail I zusammengesetzt im Betriebsmodus "Spannen / Lösen", ergänzt durch die Antriebshülse,
- Fig. 8: eine Perspektive der Bohrvorrichtung im Betriebsmodus "Bohren", teils geschnitten gezeigt,
- Fig. 9: eine Seitenansicht der Bohrvorrichtung im Betriebsmodus "Bohren", teils geschnitten gezeigt,
- Fig. 10: den Schnitt X-X aus Figur 9,
- Fig. 11: den Schnitt XI-XI aus Figur 9,
- Fig. 12: eine Perspektiv der Bohrvorrichtung im Betriebsmodus "Schrauben", teils geschnitten gezeigt,
- Fig. 13: eine Seitenansicht der Bohrvorrichtung im Betriebsmodus "Schrauben", teils geschnitten gezeigt,
- Fig. 14: den Schnitt XIV-XIV aus Figur 13,
- Fig. 15: den Schnitt XV-XV aus Figur 13,
- Fig. 16: den Schnitt XVI-XVI aus Figur 13,
- Fig. 17: den Schnitt XVII-XVII aus Figur 13,
- Fig. 18: eine Perspektive der Bohrvorrichtung im Betriebsmodus "Spannen / Lösen", teils geschnitten gezeigt,
- Fig. 19: eine Seitenansicht der Bohrvorrichtung im Betriebsmodus "Spannen / Lösen", teils geschnitten gezeigt,
- Fig. 20: den Schnitt XX-XX aus Figur 19,
- Fig. 21: den Schnitt XXI-XXI aus Figur 19,
- Fig. 22: den Schnitt XXII-XXII aus Figur 19,
- Fig. 23: den Schnitt XXIII-XXIII aus Figur 19,
- Fig. 24: den Schnitt XXIV-XXIV aus Figur 19.

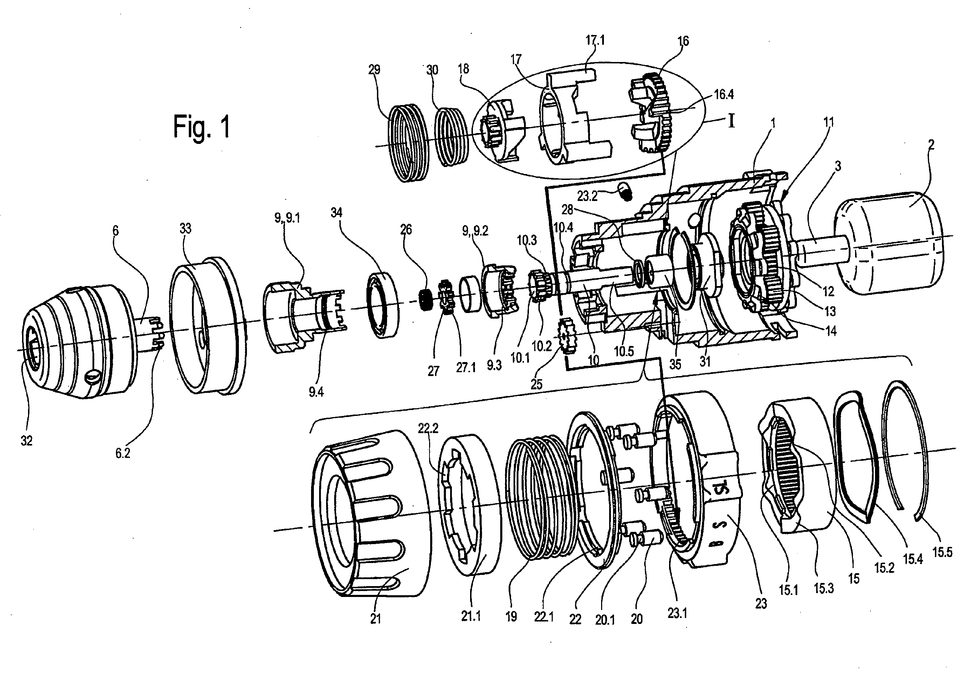

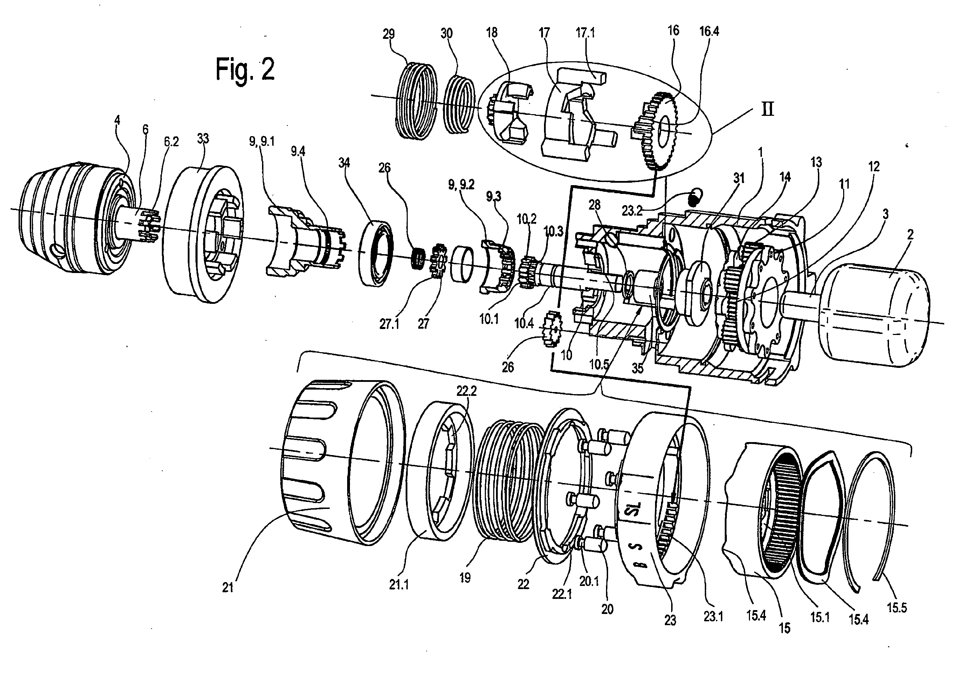

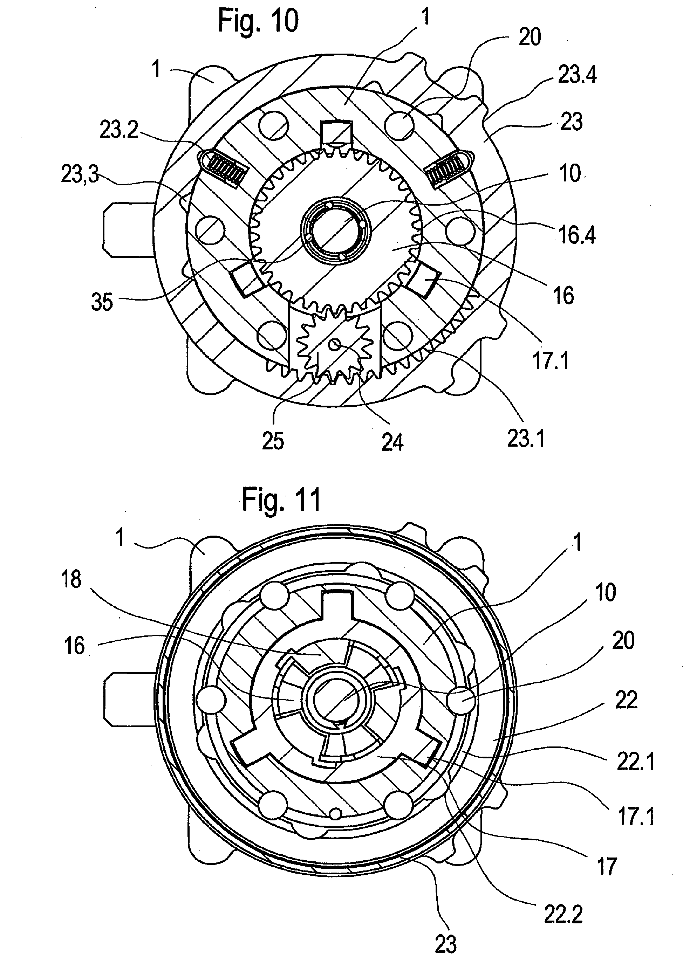

Die Explosionsansichten nach Figur 1 und Figur 2, sowie den Figuren 8 und 9, zeigen eine Bohrvorrichtung mit einer der Übersicht halber nicht vollständig dargestellten Bohrmaschine, die ein Maschinengehäuse 1 und eine mittels eines Motors 2 antreibbare Maschinenspindel 3 aufweist. Die Bohrvorrichtung umfasst weiterhin ein Bohrfutter mit einem Futterkörper 4, in dem mittels einer zwischen einem Mitnehmer 5 und einer Gewindehülse 6 ausgebildeten Gewindeverbindung 7 verstellbare Spannbacken 8 geführt sind. Das Bohrfutter weist eine Bohrspindel 9 und einen axial verstellbaren Antriebsbolzen 10 auf, der durch den Motor 2 auf seiner der Maschinenspindel 3 zugewandten Seite über ein Planetengetriebe 11 bestehend aus einem Sonnenrad 12, einem Planetenräder 13 tragenden Planetenträger 14 und einem Hohlrad 15 in nachstehend näher zu beschreibender Weise antreibbar ist. Teil der Bohrvorrichtung ist auch ein Stellglied 16. Ein Sperrglied 17 und ein Spannglied 18 sind parallel zur Kraftübertragungskette des Antriebsbolzens 10 vorgesehen, welche drehfest mit dem Maschinengehäuse 1 verbunden und durch Verstellung des Stellgliedes 16 (Fig. 10) axial verstellbar sind, für die Variation des auf den Antriebsbolzen 10 wirkenden Drehmoments beim Schalten zwischen den Betriebsmodi "Bohren", "Schrauben" oder "Spannen / Lösen". Das Hohlrad 15 weist mehrere Sperrstegaufnahmen 15.1 für drei Sperrstege 17.1 des Sperrglieds 17 auf (Fig. 1). Die Sperrstegaufnahmen 15.1 können dabei so bemessen sein, dass die Sperrstege 17.1 spielfrei oder mit Spiel in die jeweilige Sperrstegaufnahme 15.1 eingerückt sind. Es ist auch möglich, mehr als drei oder weniger als drei Sperrstege 17.1 vorzusehen. Das Hohlrad 15 besitzt außerdem auf seiner der Maschinenspindel 3 abgewandten Seite eine Stirnnocken 15.2 aufweisende Stirnseite 15.3.

Es ergibt sich insbesondere aus den Figuren 1, 8, 12 und 18, dass an diese Stirnseite 15.3 des Hohlrades 15 im gezeigten Ausführungsbeispiel sechs mit einer Drehmomentfeder 19 beaufschlagte Kupplungsbolzen 20 vorhanden sind, die gegenüber dem Maschinengehäuse 1 drehfest gelagert sind. Zur drehmomentabhängig drehfesten Lagerung des Hohlrades 15 gegenüber dem Maschinengehäuse 1 sind die Kupplungsbolzen 20 an die Stirnseite 15.3 angepresst. Hierbei können auch mehr oder weniger als sechs Kupplungsbolzen 20 vorgesehen sein und es ist auch möglich die Kupplungsbolzen 20 jeweils mit einer eigenen Drehmomentfeder 19 zu beaufschlagen, so dass mehrere Drehmomentfedern 19 einsetzbar sind. An der Stirnseite 15.3 des Hohlrads 15 kann außerdem eine Führungsrille 15.6 ausgebildet sein, die die Kupplungsbolzen 20 aufnimmt. Zur Einstellung der Kompression der Drehmomentfeder 19 ist eine Drehmomenthülse 21 vorgesehen und die Drehmomentfeder 19 ist auf ihrer der Maschinenspindel 3 abgewandten Seite durch einen mittels der Drehmomenthülse 21 axial verstellbaren Federaufnahmering 21.1 abgestützt. Axial rückwärtig ist das Hohlrad 15 durch eine Hohlradfeder 15.4 abgestützt, die ihrerseits durch einen Sicherungsring 15.5 in ihrer axialen Lage im Maschinengehäuse 1 fixiert ist. Der hier gezeigte Sicherungsring 15.5 ist umfangsseitig nicht geschlossen, so dass dieser durch elastisches Zusammenpressen der freien Enden leicht in das Maschinengehäuse 1 eingesetzt werden kann. Ebenso ist es möglich, dass am Maschinengehäuse 1 eine Sicherungsschulter ausgebildet ist, die die Hohlradfeder 15.4 in ihrer Position hält.

Die Kupplungsbolzen 20 des Ausführungsbeispiels weisen eine Ringaufnahme 20.1 auf, wodurch die Kupplungsbolzen 20 durch den Eingriff einer an einem Feststellring 22 ausgebildeten Stufe 22.1 in ihrer axialen Lage fixiert werden können. Der Festellring 22 weist im Ausführungsbeispiel desweiteren mehrere Bolzenführungen 22.2 auf. Außerdem sind die Kupplungsbolzen 20 an ihrem dem Hohlrad 15 zugewandten Ende konisch zulaufend geformt.

Der Antriebsbolzen 10 weist auf der der Maschinenspindel 3 abgewandten Seite ein Stirnrad 10.1 auf, welches im gezeigten Ausführungsbeispiel als Stirnverzahnung 10.2 gebildet ist. Neben der Stirnverzahnung 10.2, das heißt in Richtung der Maschinenspindel 3 versetzt, ist eine Mitnahmeschulter 10.3 zur Mitnahme durch das Spannglied 18 ausgebildet, woran das Spannglied 18 abgestützt werden kann. Im gezeigten Ausführungsbeispiel ist am Antriebsbolzen 10 auch eine Mitnahmerille 10.4 ausgebildet, in der ein Mitnahmering 28 positioniert ist. Desweiteren ist eine Rückführfeder 26 vorgesehen, welche ein Rückführelement 27 beaufschlagt, das am Stirnrad 10.1 abgestützt ist. Das Rückführelement 26 weist eine Rückführverzahnung 27.1 auf, die mit einer an der Gewindehülse 6 ausgebildeten Rückführgegenverzahnung 6.2 im Eingriff stehen kann. Die Rückführfeder 26 ist axial vorn liegend an einem an der Gewindehülse 6 ausgebildeten Rückführkragen 6.1 abgestützt. An dem axial hinten liegenden Ende des Antriebsbolzens 10 sind Abflachungen 10.5 vorgesehen, die eine drehfeste aber axial verstellbare Verbindung mit einer drehfest mit dem Planetenträger 14 verbundenen Antriebsbuchse 31 ausbilden. Es ist dabei aber auch zweckmäßig und ausreichend, wenn nur eine Abflachung 10.5 am Antriebsbolzen 10 vorgesehen ist.

Das Spannglied 18 ist durch eine Spanngliedfeder 30 und das Sperrglied 17 ist durch eine Sperrgliedfeder 29 beaufschlagt. Das Stellglied 16 ist axial in seiner Position festgelegt und mittels einer Modusstellhülse 23 verdrehbar (Fig. 10). Diese Modusstellhülse 23 weist eine Innenverzahnung 23.1 und das Stellglied 16 eine Stellverzahnung 16.4 auf, welche über ein auf einer Lagerachse 24 gelagertes Stellzahnrad 25 in wechselwirkendem Eingriff stehen. Im Ausführungsbeispiel ist die Stellverzahnung 16.4 über den ganzen Außenumfang des Stellglieds angeordnet. Die Innenverzahnung 23.1 ist dagegen nur in einem Kreisabschnitt an der Modusstellhülse 23 vorgesehen, wobei circa zwei Drittel deren Innenumfangs mit der Innenverzahnung 23.1 belegt ist. Es ist auch möglich die Innenverzahnung 23.1 umfangsseitig durchgehend oder die Stellverzahnung 16.4 nur abschnittsförmig zu gestalten. Desweiteren weist die Modusstellhülse 23 drei den drei Betriebsmodi entsprechenden Rastpositionen 23.3 auf, und zwar zweifach, in die genau zwei durch eine Feder am Maschinengehäuse 1 abgestützte Rastglieder 23.2 eingreifen. Im gezeigten Ausführungsbeispiel wechselwirkt die Modusstellhülse 23 mit dem Feststellring 22 zur axialen Lagesicherung der Kupplungsbolzen 20. Es ist dabei aber genauso möglich, eine weitere Hülse vorzusehen, deren Betätigung die Kupplungsbolzen 20 fixiert.

Die Bohrspindel 9 ist im gezeigten Ausführungsbeispiel mehrteilig aus einer Maschinenhohlspindel 9.1 und einer mit dieser zumindest drehfest verbundenen Antriebshülse 9.2 gebildet (Fig. 1, 8, 9). Die gezeigte Antriebshülse 9.2 weist dabei eine Hülseninnenverzahnung 9.3 auf, die mit der Stirnverzahnung 10.2 und dem Spannglied 18 wechselwirken kann. Die gezeigte Maschinenhohlspindel 9.1 dagegen weist eine Spindelverzahnung 9.4 auf, die mit der Rückführverzahnung 27.1 des Rückführelements 27 im Eingriff stehen kann. Es ist auch eine Abdeckkappe 33 als Staubschutz vorgesehen. Desweiteren ist zwischen der Maschinenhohlspindel 9.1 und dem Maschinengehäuse ein Lager 34 positioniert, wobei außerdem ein Bolzenlager 35 zwischen dem Stellglied 16 und dem Antriebsbolzen 10 vorgesehen ist.

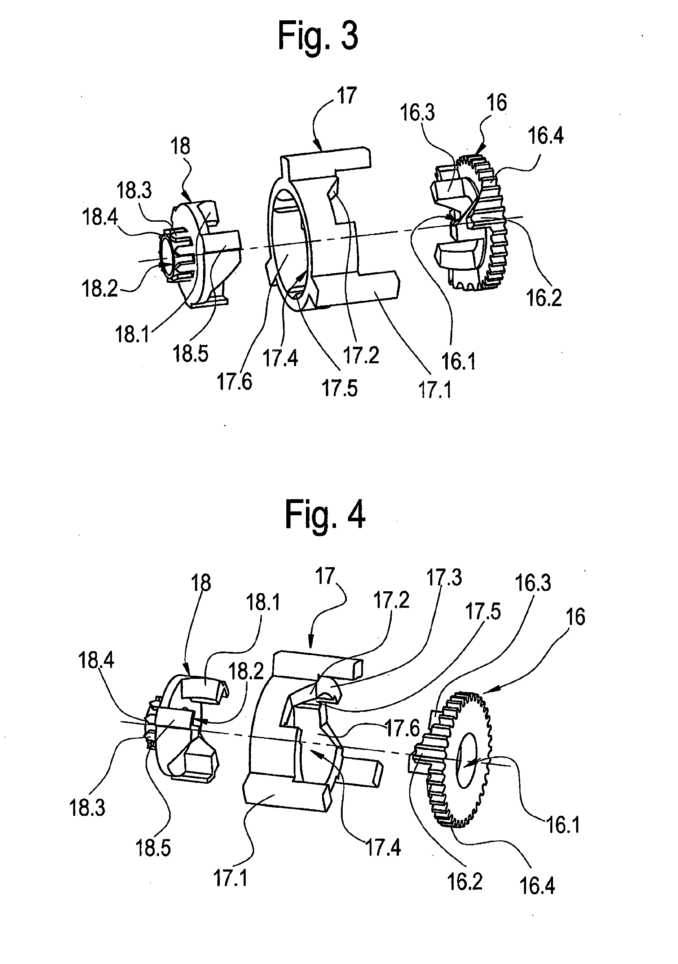

Aus Figur 3 und Figur 4 ist ersichtlich, dass das Stellglied 16 eine der Durchführung des Antriebsbolzens 10 dienende Stellgliedbolzendurchführung 16.1 aufweist, und im gezeigten Ausführungsbeispiel drei mit drei am Sperrglied 17 vorgesehenen Sperrgliedsteuerkurven 17.2 wechselwirkende Sperrsteuerglieder 16.2 und drei mit drei am Spannglied 18 vorgesehenen Spanngliedsteuerkurven 18.1 wechselwirkende Spannsteuerglieder 16.3 ausgebildet sind. Die Sperrsteuerglieder 16.2 sind gegenüber den Spannsteuergliedern 16.3 radial in Richtung des Antriebsbolzens 10 versetzt. Desweiteren weisen die Spannsteuerglieder 16.3 gegenüber den Sperrsteuergliedern 16.2 eine unterschiedliche Steigung, eine unterschiedlich starke axiale Erstreckung und eine unterschiedliche lange Kreisbogenlänge auf. Die Kreisbogenlänge bezeichnet dabei die umfangsseitige Erstreckung des jeweiligen Sperrsteuerglieds 16.2 beziehungsweise Spannsteuergliedes16.3. Im gezeigten Ausführungsbeispiel erstreckt sich eines der Sperrsteuerglieder 16.2 um circa ein Neuntel des Umfangs und eines der Spannsteuerglieder 16.3 um circa ein Achtel des Umfangs des Stellgliedes 16. Die Spannsteuerglieder 16.3 sind gegenüber den Sperrsteuergliedern 16.2 im gezeigten Ausführungsbeispiel in ihrer axialen Erstreckung verlängert ausgebildet.

Das Spannglied 18 selbst weist eine der Durchführung des Antriebsbolzens 10 dienende Spanngliedbolzendurchführung 18.2, eine eine Spanngliedaußenverzahnung 18.3 aufweisende Spanngliedextension 18.4 und im bevorzugten Ausführungsbeispiel genau drei Spanngliedführungsmittel 18.5 auf. Diese Spanngliedaußenverzahnung 18.3 kann mit der Hülseninnenverzahnung 9.3 der Antriebshülse 9.2 wechselwirken. Hier ist es ebenfalls denkbar, dass die Antriebshülse 9.2 eine Außenverzahnung und das Spannglied 18 eine Innenverzahnung aufweist.

Das Sperrglied 17 selbst zeigt im Ausführungsbeispiel eine der Durchführung des Antriebsbolzens10 dienende Sperrgliedbolzendurchführung 17.4 und genau drei an einer Innenwandung 17.6 ausgebildeten Spanngliedführungen 17.5 zur Führung von den an dem Spannglied 18 vorgesehen Spanngliedführungsmitteln 18.5. Desweiteren ist am Sperrglied 17 eine Sperrgliedlauffläche 17.3 ausgebildet, auf der das Stellglied 16 entlang gleiten kann.

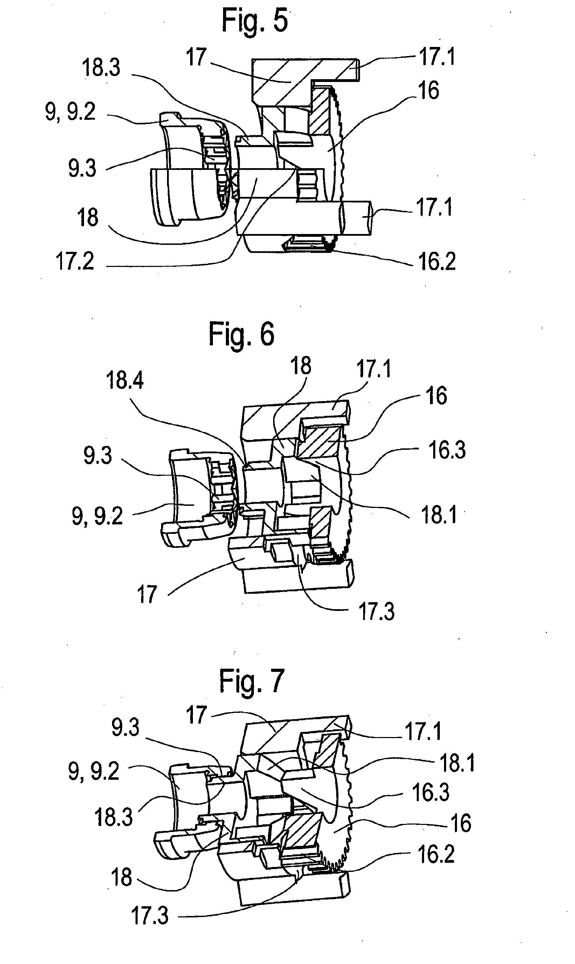

In Figur 5 ist die Stellung des Spanngliedes 18 und des Sperrgliedes 17 in Relation zum Stellglied 16 im Betriebsmodus "Bohren" gezeigt, wobei der Übersicht halber auch die drehfest mit der Maschinenhohlspindel 9.1 verbundene Antriebshülse 9.2 dargestellt ist. Das Sperrglied 17 ist durch den Druck der Sperrgliedfeder 29 und das Spannglied 18 ist durch den Druck der Spanngliedfeder 30 gegen das Stellglied 16 gedrückt und das Spannglied 18 und das Sperrglied 17 sind gegenüber dem Maschinengehäuse 1 drehfest in der Bohrvorrichtung gelagert. Das Sperrsteuerglied 16.2 und die Sperrgliedsteuerkurve 17.2 wechselwirken in diesem Betriebsmodus nicht miteinander, so dass das Sperrglied 17 axial nach hinten versetzt und die Sperrstege 17.1 in die Sperrstegaufnahmen 15.1 des nicht dargestellten Hohlrades 15 eingerückt sind. Das Spannglied 18 ist mit seiner Spanngliedaußenverzahnung 18.3 außer Eingriff mit der Hülseninnenverzahnung 9.3 der Antriebshülse 9.2, so dass diese nicht drehfest mit dem Maschinengehäuse 1 gelagert ist.

In Figur 6 ist die Stellung des Spanngliedes 18 und des Sperrgliedes 17 in Relation zum Stellglied 16 im Betriebsmodus "Schrauben" gezeigt. Hierbei ist durch Verdrehen des Stellgliedes 16, das heißt durch Verdrehen der Modusstellhülse 23, das Sperrsteuerglied 16.2 entlang der Sperrgliedsteuerkurve 17.2 geführt bis das Sperrsteuerglied 16.2 an der Sperrgliedlauffläche 17.3 anliegt. Da das Stellglied 16 in seiner axialen Lage festgelegt ist, verstellt sich das Sperrglied 17 gegen die Kraft der Sperrgliedfeder 30 axial nach vorn, in Richtung der Spannbacken 8, und die Sperrstege 17.1 rücken aus den Sperrstegaufnahmen 15.1 des Hohlrades 15 aus. Es liegt jedoch keine Wechselwirkung der Spannsteuerglieder 16.3 mit den Spanngliedsteuerkurven 18.1 beim Übergang vom Betriebsmodus "Bohren" in den Betriebsmodus "Schrauben" vor.

In Figur 7 ist die Stellung des Spanngliedes 18 und des Sperrgliedes 17 in Relation zum Stellglied 16 im Betriebmodus "Spannen / Lösen" gezeigt. Hierbei wechselwirken nunmehr durch Verdrehen des Stellgliedes 16 die Spannsteuerglieder 16.3 mit den Spannsteuerkurven 18.1, so dass das Spannglied 18 axial in Richtung der Spannbacken 8 verstellt ist. Die Sperrsteuerglieder 16.2 gleiten dabei auf der Sperrgliedlauffläche 17.3 entlang, ohne das Sperrglied 17 zu verstellen. Die Spanngliedaußenverzahnung 18.3 greift nun in die Hülseninnenverzahnung 9.3 der Antriebshülse 9.2 ein und hält diese damit drehfest gegenüber dem Maschinengehäuse 1.

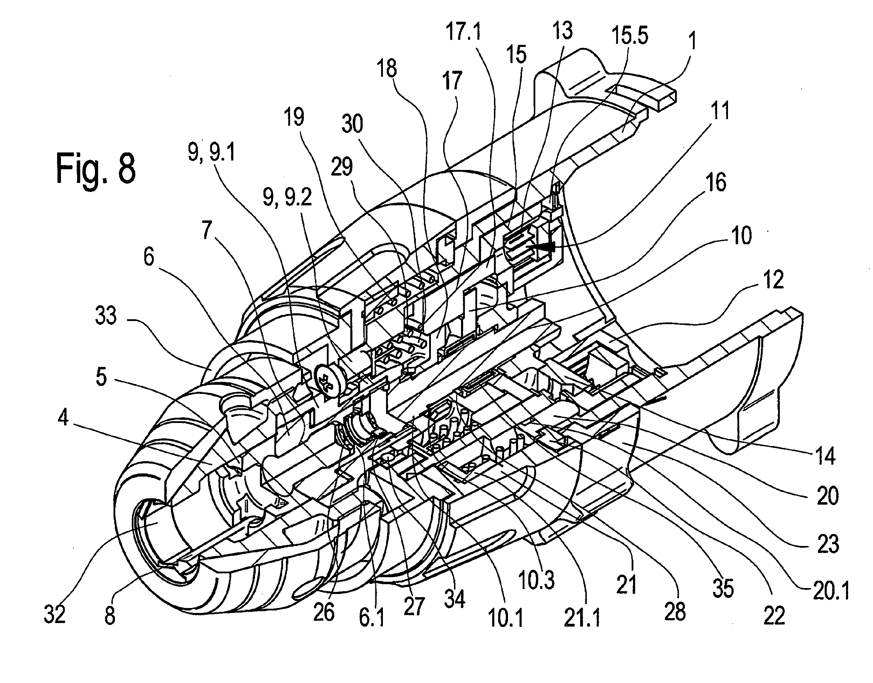

In den Figuren 8 bis 11 ist die Bohrvorrichtung im Betriebsmodus "Bohren" gezeigt. Hierbei sind durch die axiale Verstellung des Sperrglieds 17 zur drehfesten Lagerung des Hohlrades 15 gegenüber dem Maschinengehäuse 1 die Sperrstege 17.1 in die Sperrstegaufnahmen 15.1 eingerückt. Das Einrücken erfolgt durch die Federkraft der das Sperrglied 17 beaufschlagenden Sperrgliedfeder 29, welche es axial nach hinten, also in Richtung der Maschinenspindel 3 drückt. Desweiteren ist der Feststellring 22 mit seiner Stufe 22.1 im Eingriff mit den Kupplungsbolzen 20, die an die Stirnseite 15.3 des die Stirnnocken 15.3 aufweisenden Hohlrades 15 angepresst sind.

In Figur 10 ist die Innenverzahnung 23.1 der Modusstellhülse 23 zu erkennen, über die das auf der Lagerachse 24 gelagerte Stellzahnrad 25 in wechselwirkendem Eingriff mit der Stellverzahnung 16.4 des Stellgliedes 16 steht. Außerdem sind die zwei Rastglieder 23.2 in den jeweiligen Rastpositionen 23.3 des Betriebsmodus "Bohren" positioniert. Die Modusstellhülse 23 besitzt eine Außenkontur 23.4, welche eine vereinfachte Handhabung bereitstellt.

In Figur 11 ist der Feststellring 22 mit seiner Stufe 22.1 gezeigt, die mit den Ringaufnahmen 20.1 der Kupplungsbolzen 20 im Eingriff steht. Hierdurch werden die Kupplungsbolzen 20 in ihrer axialen Lage fixiert, wobei sie durch das Anliegen an der Stirnseite 15.3 das Hohlrad 15 vor einer relativen Drehung bezüglich des Maschinengehäuses 1 zusätzlich, also die Sperrstege 17.1 unterstützend, sichern. Diese zusätzliche Sicherung durch die Kupplungsbolzen 20 ist allerdings nicht zwingend notwendig. Der Antriebsbolzen 10 ist formschlüssig mit der Antriebshülse 9.2 verbunden, welche ihrerseits formschlüssig mit der Maschinenhohlspindel 9.1 verbunden ist. Der Antriebsbolzen 10 ist axial nach hinten, in Richtung der Maschinenspindel 3 versetzt, wobei das Rückführelement 27 durch die Kraft der Rückführfeder 26 mit seiner Rückführverzahnung 27.1 formschlüssig mit der Spindelverzahnung 9.4 verbunden ist. In einer nicht näher gezeigten Ausführungsform ist das Rückführelement 27 nicht vorgesehen und der Antriebsbolzen 10 so gebildet, dass dieser im Betriebsmodus "Bohren" formschlüssig mit der Gewindehülse 6 und formschlüssig mit der Antriebshülse 9.2 verbunden ist.

Im Betriebmodus "Bohren" wird die Kraft des Motors 2 durch die Maschinenspindel 3 über das Planetengetriebe 11 auf den Antriebsbolzen 10 übertragen. Der Antriebsbolzen 10 ist mit seiner Stirnverzahnung 10.2 im Eingriff mit der Hülseninnenverzahnung 9.3 der Antriebshülse 9.2, wodurch die Maschinenhohlspindel 9.1 angetrieben wird. Gleichzeitig ist durch die Kraft der Rückführfeder 26 die Rückführverzahnung 27.1 im Eingriff mit der Spindelverzahnung 9.4. Eine Relativdrehung zwischen der Gewindehülse 6 und der Maschinenhohlspindel 9.1 ist ausgeschlossen, da beide gleichzeitig mit der Umdrehung des Antriebsbolzens 10 umlaufen. Das Hohlrad 15 ist durch die in die Sperrstegaufnahmen 15.1 eingerückten Sperrstege 17.1 daran gehindert, sich gegenüber dem Maschinengehäuse 1 zu verdrehen. Daher ist im Betriebsmodus "Bohren" das maximal mögliche Drehmoment auf den Antriebsbolzen 10 übertragbar.

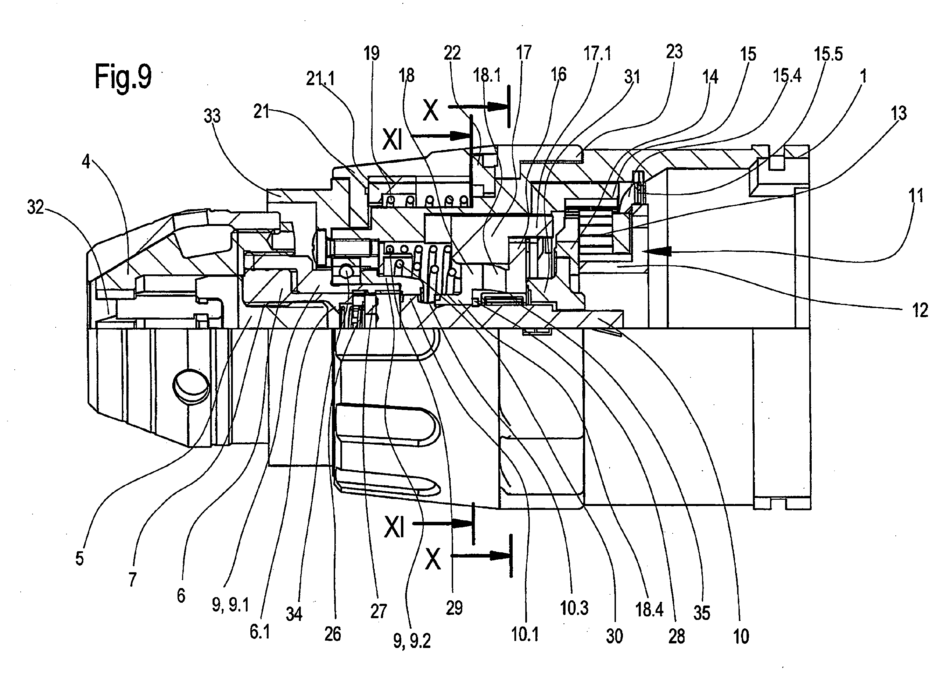

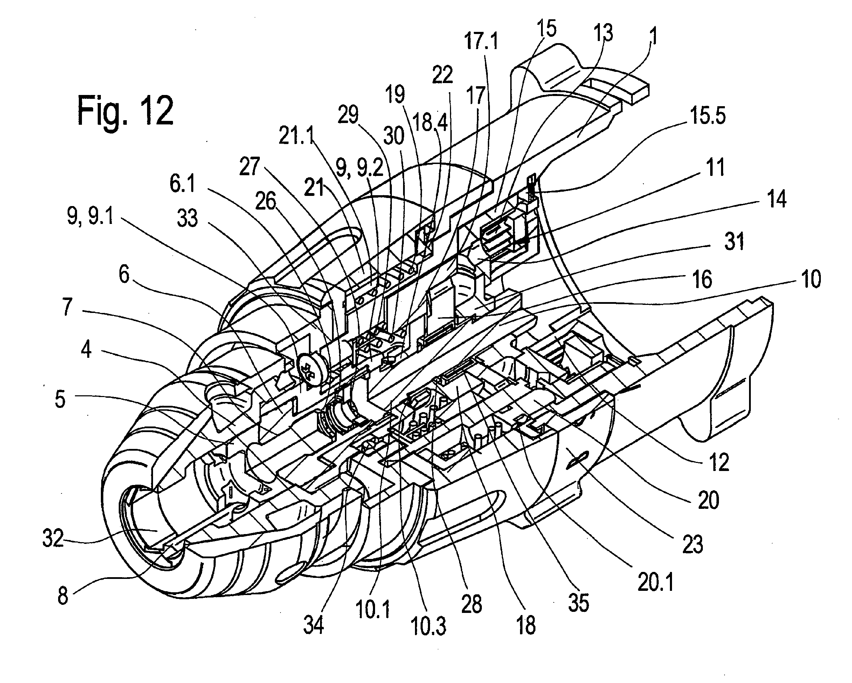

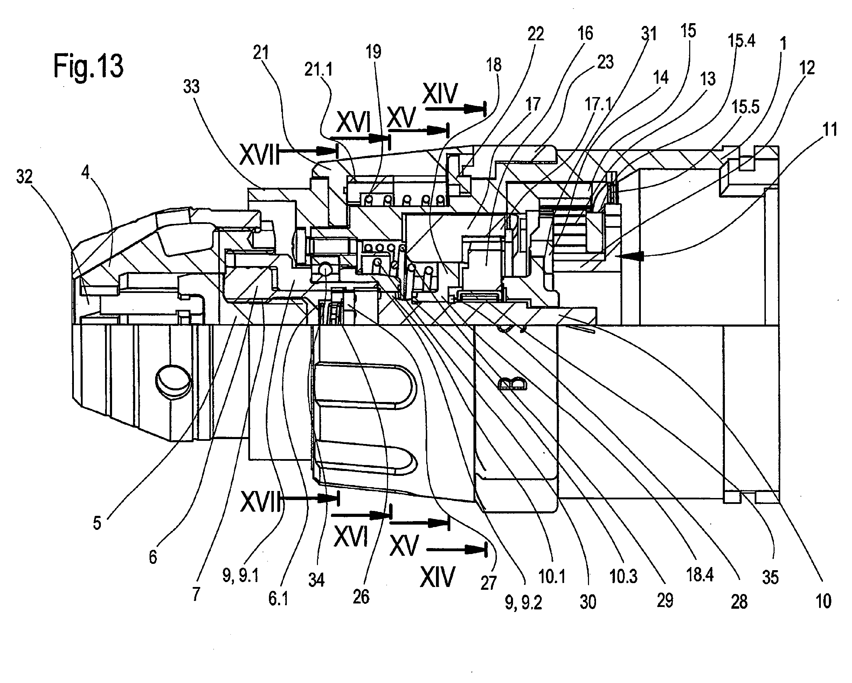

In den Figuren 12 bis 17 ist die erfindungsgemäße Bohrvorrichtung im Betriebsmodus "Schrauben" gezeigt. Hier sind durch die axiale Verstellung des Sperrglieds 17 gegen die Kraft der Sperrgliedfeder 29 nach vorne die Sperrstege 17.1 aus den Sperrstegaufnahmen 15.1 des Hohlrades 15 ausgerückt. Die unterschiedlich starke Kompression der Sperrgliedfeder 29 zwischen den Betriebsmodus "Bohren" und dem Betriebsmodus "Schrauben" wird durch die direkte Gegenüberstellung der Figuren 13 und 9 erkennbar. Außerdem sind nach wie vor die Kupplungsbolzen 20 durch die Drehmomentfeder 19 beaufschlagt und gegen die Stirnseite 15.3 des Hohlrades 15 gepresst.

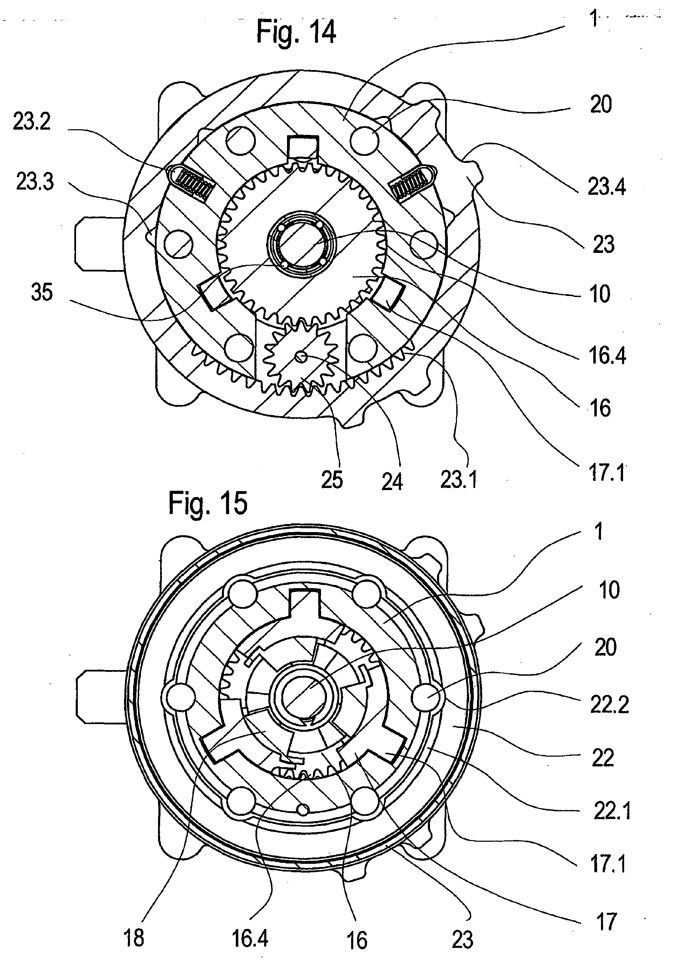

In Figur 14 ist zu erkennen, dass die Modusstellhülse 14 gegenüber der Stellung des Betriebmodus "Bohren" in den Betriebsmodus "Schrauben" verdreht ist. Außerdem sind die zwei Rastglieder 23.2 in den jeweiligen Rastpositionen 23.3 des Betriebsmodus "Schrauben" angeordnet, welche im Ausführungsbeispiel zwischen den beiden Rastpositionen 23.3 "Bohren" und "Spannen / Lösen" positioniert sind.

Wie aus Figur 15 ersichtlich ist, sind die Kupplungsbolzen 20 durch den Feststellring 22 freigegeben und können in den Bolzenführungen 22.2 gegen die Federkraft der Drehmomentfeder 19 axial verstellt werden. Die Drehmomentfeder 19 ist auf ihrer der Maschinenspindel 3 abgewandten Seite durch den mittels der Drehmomenthülse 21 axial verstellbaren Federaufnahmering 21.1 abgestützt. Hierdurch kann das maximal übertragbare Drehmoment durch Verstellen der Drehmomenthülse 21 variiert werden. Je stärker die Kompression der Drehmomentfeder 19 ist, desto ein höheres Drehmoment ist notwendig, um die Kupplungsbolzen 20 durch die Stirnnocken 15.2 am Hohlrad 15 axial nach vorn in Richtung Werkzeugaufnahme 32 zu drücken.

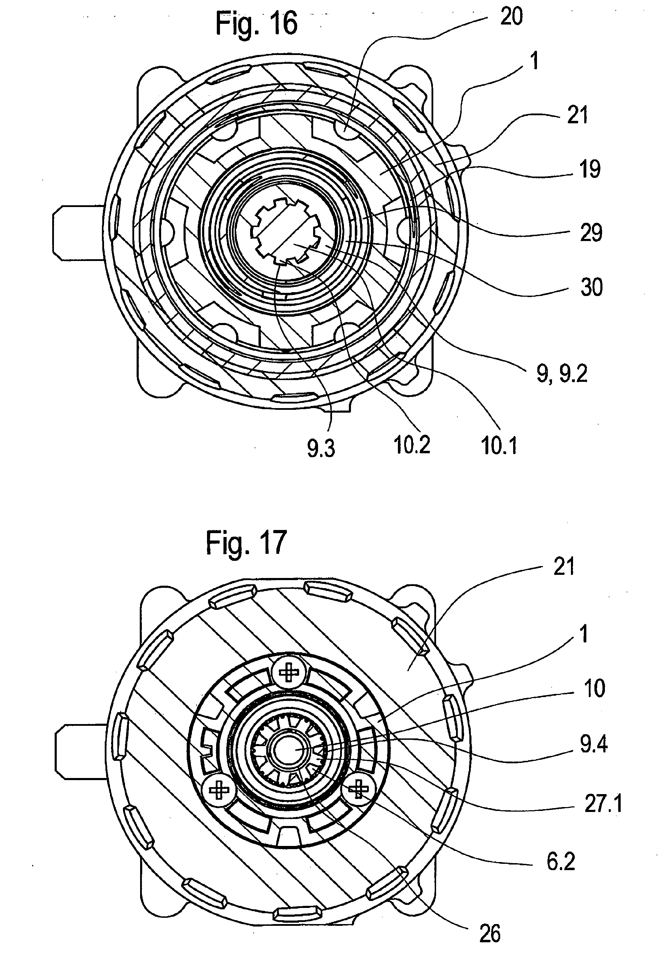

In Figur 16 ist verdeutlicht, dass, wie im Betriebsmodus "Bohren", auch im Betriebsmodus "Schrauben" der Antriebsbolzen 10 formschlüssig mit der Antriebshülse 9.2 gelagert ist. Außerdem sind hier die die Kupplungsbolzen 20 beaufschlagende Drehmomentfeder 19, die das Sperrglied 17 beaufschlagende Sperrgliedfeder 29 und die das Spannglied 18 beaufschlagende Spanngliedfeder 30 zu erkennen. Diese können, wie im gezeigten Ausführungsbeispiel dargestellt, sich in Richtung der Maschinenspindel 3 konisch verjüngend verlaufen.

Den Figuren 13 und 17 ist zu entnehmen, dass die Rückführverzahnung 27.1 des durch die Rückführfeder 26 beaufschlagten Rückführelementes 27 im Eingriff mit der an der Gewindehülse 6 ausgebildeten Rückführgegenverzahnung 6.2 ist. Die Rückführverzahnung 27.1 ist ebenso formschlüssig mit der Spindelverzahnung 9.4 verbunden. Die Kraft des Motors 2 wird hier durch die Maschinenspindel 3 über das Planetengetriebe 11 auf den Antriebsbolzen 10 übertragen. Dieser wiederum treibt mit seiner Stirnverzahnung 10.2 die Antriebshülse 9.2 und die mit dem Futterkörper 4 verbundene Maschinenhohlspindel 9.1 an. Gleichzeitig wird die Gewindehülse 6 über den Formschluss der Rückführverzahnung 27.1 mit der Spindelverzahnung 9.4 gegen radiale Verstellung gesichert. Eine Relativdrehung der Gewindehülse 6 bezüglich der Maschinenhohlspindel 9.1 ist damit ausgeschlossen. Wird im Betriebsmodus "Schrauben" ein vorgebbares Drehmoment überschritten, so weichen die Kupplungsbolzen 20 vor den Stirnnocken 15.2 an der Stirnseite 15.3 des Hohlrades 15 zurück und das Hohlrad 15 ist nicht mehr drehfest bezüglich des Maschinengehäuses 1 festgelegt. Durch die Drehung des Hohlrads 15 relativ zum Maschinengehäuse 1 wird keine Kraft mehr auf den Antriebsbolzen 10 übertragen, womit das Bohrfutter momentan nicht weiter angetrieben ist.

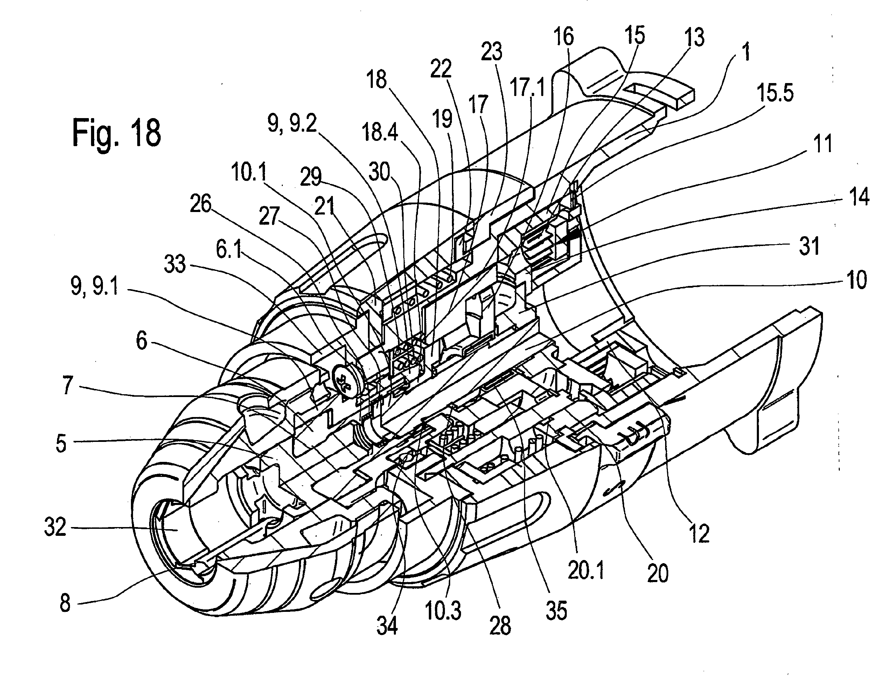

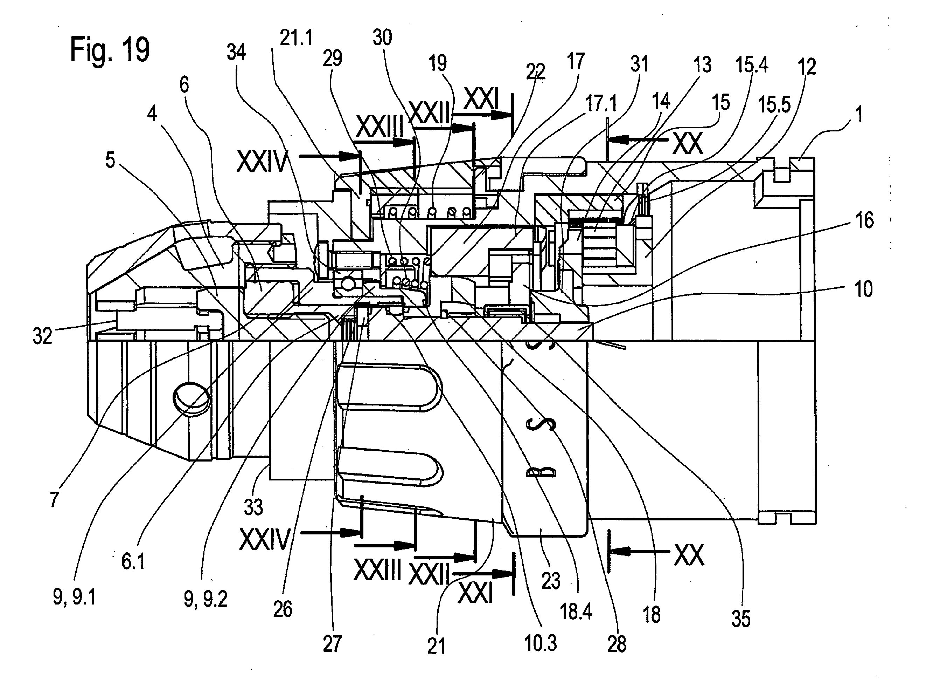

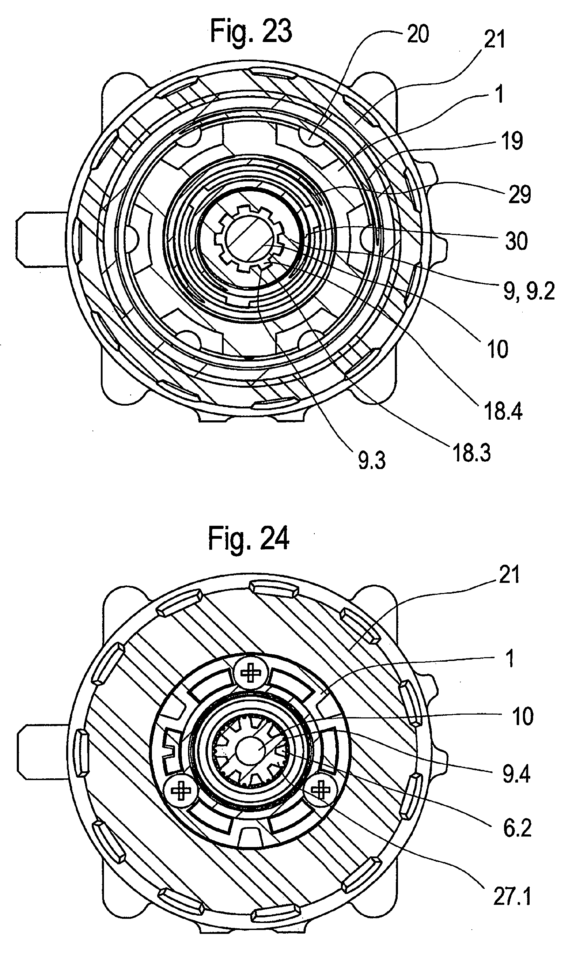

In den Figuren 18 bis 24 ist die erfindungsgemäße Bohrvorrichtung im Betriebsmodus "Spannen / Lösen" gezeigt. Durch die Verstellung des Stellgliedes 16 und der daraus resultierenden axialen Verstellung des Spanngliedes 18 gegen die Kraft der Spanngliedfeder 30 ist ein Formschluss zwischen dem Spannglied 18 mit seiner Spanngliedextension 18.4 und der Antriebshülse 9.2 wirksam, wie insbesondere der Figur 23 zu entnehmen ist. Einer Gegenüberstellung der Figuren 19 und 13, beziehungsweise 19 und 9 kann man entnehmen, dass im Betriebsmodus "Spannen / Lösen" die Spanngliedfeder 30 komprimiert ist. Durch den Formschluss des Spanngliedes 18 und der Antriebshülse 9.2 ist diese drehfest bezüglich des Maschinengehäuses 1 gehalten, womit die Maschinenhohlspindel 9.1 und damit der gesamte Futterkörper 4 drehfest gegenüber dem Maschinengehäuse 1 gelagert sind. Der Antriebsbolzen 10 ist durch die Mitnahme des Spannglieds 18 bei dessen axialen Verstellung formschlüssig mit der Gewindehülse 6 verbunden.

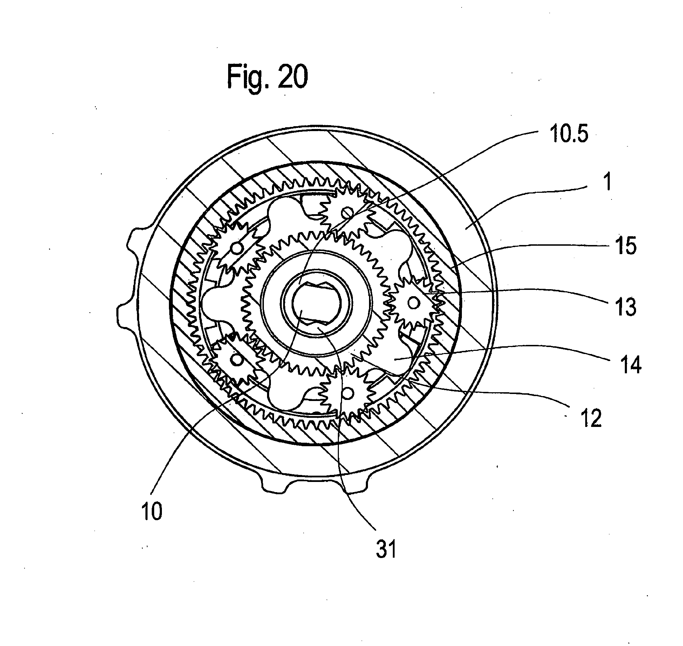

In Figur 20 ist das Planetengetriebe 11 gezeigt, welches in der dargestellten Ausführungsform fünf auf dem Planetenträger 14 angeordnete Planetenräder 13 aufweist. Das Sonnenrad 12 ist mit den Planetenrädern 13 verzahnt, welche ihrerseits auf dem Hohlrad 15 abrollen.

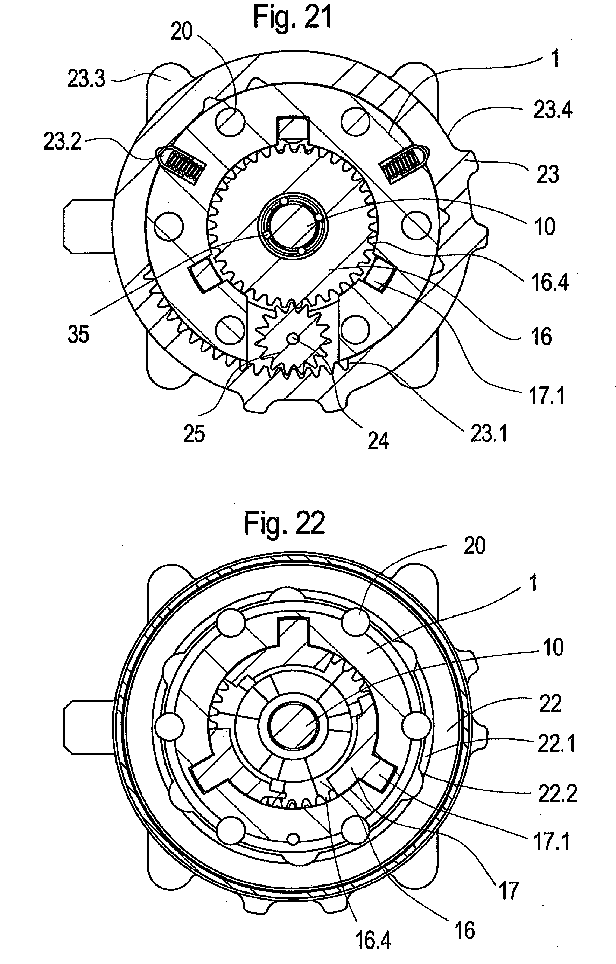

Figur 21 zeigt die Modusstellhülse 23 in ihrer Position des Betriebsmodus "Spannen / Lösen". Hier wird desweiteren ersichtlich, dass die Rastglieder 23.2 nun in den beiden dritten, dem "Spannen / Lösen" zugeordneten Rastpositionen 23.3 aufgenommen sind. Wieder ist der Verzahnungseingriff der Modusstellhülse 23 mit der Stellverzahnung 16.4 des Stellgliedes 16 über das auf der Lagerachse 24 gelagerte Stellzahnrad 25 zu erkennen.

In der Figur 22 ist gezeigt, dass auch im Betriebsmodus "Spannen / Lösen" die Kupplungsbolzen 20 durch den Feststellring 22 in ihrer axialen Lage gesichert und dadurch permanent an die Stirnseite 15.3 des Hohlrades 15 angepresst sind. Das Hohlrad 15 ist zu seiner drehmomentabhängig drehfesten Lagerung gegenüber dem Maschinengehäuse 1 durch die auf seiner der Maschinenspindel 3 zugewandten Seite vorgesehene Hohlradfeder 15.4 abgestützt, welche ihrerseits wiederum durch den Sicherungsring 15.5 abgestützt ist.

Die Figur 24 verdeutlicht, dass nun das Rückführelement 27, durch die Verstellung des Antriebsbolzens 10 axial nach vorn gegen die Kraft der Rückführfeder 26 mit seiner Rückführverzahnung 27.1 mit der Rückführgegenverzahnung 6.2 der Gewindehülse 6 drehfest im Eingriff steht. Die Rückführfeder 26 ist dabei an dem an der Gewindehülse 6 ausgebildeten Rückführkragen 6.1 abgestützt.

Im Betriebsmodus "Spannen / Lösen" wird die Kraft des Motors 2 durch die Maschinenspindel 3 über das Planetengetriebe 11 auf den Antriebsbolzen 10 übertragen. Dieser treibt durch den wirkenden Formschluss die Gewindehülse 6 an. Zwischen der Antriebshülse 9.2, und damit mit der Maschinenhohlspindel 9.1, und dem Spannglied 18 ist ein Formschluss wirksam, der den Futterkörper 4 drehfest mit dem Maschinengehäuse 1 verbindet. Es ist eine Relativdrehung der Gewindehülse 6 bezüglich der Maschinenhohlspindel 9.1 ermöglicht, die über die Gewindeverbindung 7 mit dem Mitnehmer 5 die Spannbacken 8 verstellt.

Bei Überschreiten eines vorgebbaren Drehmoments weicht das Hohlrad 15 axial nach hinten gegen die Kraft der Hohlradfeder 15.4 aus und wird dadurch zur Verdrehung gegenüber dem Maschinengehäuse 1 frei. Hierdurch wird die Umdrehung des Antriebsbolzens 10 und damit die Verstellung der Spannbacken 8 gestoppt.

Nachdem nunmehr der konstruktive Aufbau der Bohrvorrichtung erläutert ist, soll nachfolgend kurz deren Betriebsweise erläutert werden:

Die Bohrvorrichtung befinde sich zunächst im Betriebsmodus "Bohren", wobei in der Werkzeugaufnahme 32 ein Bohrwerkzeug durch die Spannbacken 8 gespannt ist. Das Rastglied 23.2 ist in der Rastposition 23.3 "Bohren" der Modusstellhülse 23 aufgenommen (Fig. 10). Die Kupplungsbolzen 20 sind axial unverstellbar an die Stirnseite 15.3 des Hohlrades 15 gepresst. Diese axiale Unverstellbarkeit ist durch den Eingriff der Stufe 22.1 des Feststellrings 22 in die Ringaufnahmen 20.1 der Kupplungsbolzen 20 geschaffen (Fig. 8). Das Sperrglied 17 ist in diesem Betriebsmodus axial nach hinten verstellt, wodurch die Sperrstege 17.1 in die Sperrstegaufnahmen 15.1 des Hohlrads 15 eingerückt sind und damit das maximal mögliche Drehmoment auf den Antriebsbolzen 10 übertragbar ist (Fig. 8,9). Die Antriebshülse 9.2 ist formschlüssig mit dem Antriebsbolzen 10 verbunden und wird von diesem angetrieben. Dadurch wird über die zumindest drehfeste Verbindung der Antriebshülse 9.2 mit der Maschinenhohlspindel 9.1 der Futterkörper 4 verdreht. Der Antriebsbolzen 10 selbst wird durch die Kraft des Motors 2 über das Planetengetriebe 11 und die Antriebsbuchse 31 angetrieben.

Nach dem Bohrvorgang soll beispielsweise das Bohrwerkzeug aus der Werkzeugaufnahme 32 herausgenommen und ein Schrauberbit gespannt werden. Hierzu verdreht der Benutzer die Modusstellhülse 23, wodurch das Rastglied 23.2 - über die Rastposition 23.3 "Schrauben" hinweg - in der Rastposition 23.3 "Spannen / Lösen" aufgenommen wird. Das Stellzahnrad 25 wird durch die Innenverzahnung 23.1 der Modusstellhülse 23 verdreht und verdreht seinerseits über die Stellverzahnung 16.4 das Stellglied 16 (Fig. 21). Beim Verdrehen des Stellgliedes 16 wirken zunächst das Sperrsteuerglied 16.2 und die Sperrgliedsteuerkurve 17.2 zusammen, wodurch das Sperrglied 17 axial nach vorn gegen die Kraft der Sperrgliedfeder 29 verstellt wird. Die Sperrstege 17.1 rücken somit aus den Sperrstegaufnahmen 15.1 des Hohlrades 15 aus. Daran anschließend wirken das Spannsteuerglied 16.3 und die Spanngliedsteuerkurve 18.1 zusammen, wodurch das Spannglied 18 axial nach vorn gegen die Kraft der Spanngliedfeder 30 verstellt wird. Durch das Vorrücken des Spanngliedes 18 greift die Spanngliedaußenverzahnung 18.3 der Spanngliedextension 18.4 in die Hülseninnenverzahnung 9.3 der Antriebshülse 9.2 (Fig. 18, 19). Diese, und damit die Maschinenhohlspindel 9.1 und der Futterkörper 4 werden dadurch drehfest gegenüber dem Maschinengehäuse 1 gelagert. Durch die axiale Verstellung des Spanngliedes 18 wird der Antriebsbolzen 10 mitgeführt. Dieser ist nun formschlüssig mit der Gewindehülse 6 verbunden und treibt diese an. Wird der Motor 2 also in der dem Lösen entsprechenden Drehrichtung betrieben, überträgt dieser die Drehung auf den Antriebsbolzen 10, wodurch die Gewindehülse 6 verdreht wird. Aufgrund der drehfesten Lagerung des Futterkörpers 4 gegenüber dem Maschinengehäuse 1 spindelt der Mitnehmer 5 entgegen der Richtung der Werkzeugaufnahme 32 ein, wodurch die Spannbacken axial nach hinten gezogen und infolge der Führung am Konus nach außen zum Öffnen verstellt werden und das Bohrwerkzeug durch die Verstellung der Spannbacken 8 freigegeben wird.

Nun kann ein Schrauberbit eingesetzt werden. Hierzu wird dieser in der Werkzeugaufnahme positioniert und die Drehrichtung des Motors 2 umgekehrt, also der Motor 2 in der dem Spannen entsprechenden Drehrichtung betrieben. Bei Überschreiten eines bestimmten Drehmoments beim Spannvorgang weicht das Hohlrad 15 gegen die Kraft der Hohlradfeder 15.4 zurück, wodurch das Hohlrad 15 gegenüber dem Maschinengehäuse 1 verdreht und die Kraft des Motors 2 nicht mehr vollständig auf den Antriebsbolzen 10 übertragen wird, also eine der beiden in der Bohrvorrichtung realisierten Rutschkupplungen wirksam ist.

Um nun die Bohrvorrichtung im Betriebsmodus "Schrauben" zu betreiben, muss der Benutzer die Modusstellhülse 23 drehend betätigen, wodurch deren Innenverzahnung 23.1 das Stellzahnrad 25 und dieses das Stellglied 16 verdreht. Das Rastglied 23.2 wird nun in der Rastposition 23.3 "Schrauben" aufgenommen (Fig. 14). Durch dieses Verdrehen wirkt wieder das Spannsteuerglied 16.3 des Stellglieds 16 mit der Spanngliedsteuerkurve 18.1 zusammen, und zwar derart, dass die Spanngliedfeder 30 das Spannglied 18 axial nach hinten versetzt. Eine Wechselwirkung zwischen dem Sperrsteuerglied 16.2 und der Sperrgliedsteuerkurve 17.2 des Sperrgliedes 17 findet nicht statt, so dass die Sperrstege 17.1 noch immer aus den Sperrstegaufnahmen 15.1 des Hohlrades 15 ausgerückt sind. Die Verbindung zwischen der Antriebshülse 9.2 und dem Spannglied 18 wird beim Verdrehen des Stellglieds 16 gelöst und der Antriebsbolzen 10 wird mittels des Mitnahmeringes 28 wieder axial nach hinten durch die Verstellung des Spanngliedes 18 mitgeführt. Nun ist der Antriebsbolzen 10 - wie im Betriebsmodus "Bohren" - wieder formschlüssig mit der Antriebshülse 9.2 verbunden, wodurch dieser den Futterkörper 4 antreibt. Im Betriebsmodus "Schrauben" sind die Kupplungsbolzen 20 durch den Feststellring 22 freigegeben. Nun kann der Nutzer durch Verdrehen der Drehmomenthülse 21 das Drehmoment wählen, bei dem diese Rutschkupplung anspricht. Durch Überschreiten eines durch die Drehmomenthülse 21 vom Benutzer vorgebbaren Drehmoments, weichen die Kupplungsbolzen 20 axial den Stirnnocken 15.2 des Hohlrads 15 aus, wodurch dieses gegenüber dem Maschinengehäuse 1 verdreht wird. Die Kraft des Motors 2 wird somit nicht mehr vollständig auf den Antriebsbolzen 10 übertragen.

Bei Überschreiten der durch die beiden Rutschkupplungen vorgebbaren Drehmomente rutschen die Kupplungsbolzen 20 über die Stirnnocken 15.2 der Hohlrades 15. Dies hat ein ratschendes Geräusch zur Folge, das dem Benutzer signalisiert, dass das jeweilige vorbestimmte Drehmoment überschritten ist. Damit ist durch die Rutschkupplungen also auch ein Drehmomentindikator für den Benutzer geschaffen.

### Bezugszeichenliste

- 1: Maschinengehäuse
- 2: Motor
- 3: Maschinenspindel
- 4: Futterkörper
- 5: Mitnehmer
- 6: Gewindehülse
- 6.1: Rückführkragen
- 6.2: Rückführgegenverzahnung
- 7: Gewindeverbindung
- 8: Spannbacken
- 9: Bohrspindel
- 9.1: Maschinenhohlspindel
- 9.2: Antriebshülse
- 9.3: Hülseninnenverzahnung
- 9.4: Spindelverzahnung
- 10: Antriebsbolzen
- 10.1: Stirnrad
- 10.2: Stirnverzahnung
- 10.3: Mitnahmeschulter
- 10.4: Mitnahmerille
- 10.5: Abflachung
- 11: Planetengetriebe
- 12: Sonnenrad
- 13: Planetenräder
- 14: Planetenträger
- 15: Hohlrad
- 15.1: Sperrstegaufnahme
- 15.2: Stirnnocken
- 15.3: Stirnseite
- 15.4: Hohlradfeder
- 15.5: Sicherungsring
- 15.6: Führungsrille
- 16: Stellglied
- 16.1: Stellgliedbolzendurchführung
- 16.2: Sperrsteuerglied
- 16.3: Spannsteuerglied
- 16.4: Stellverzahnung
- 17: Sperrglied
- 17.1: Sperrsteg
- 17.2: Sperrgliedsteuerkurve
- 17.3: Sperrgliedlauffläche
- 17.4: Sperrgliedbolzendurchführung
- 17.5: Spanngliedführung
- 17.6: Innenwandung
- 18: Spannglied
- 18.1: Spanngliedsteuerkurve
- 18.2: Spanngliedbolzendurchführung
- 18.3: Spanngliedaußenverzahnung
- 18.4: Spanngliedextension
- 18.5: Spanngliedführungsmittel
- 19: Drehmomentfeder
- 20: Kupplungsbolzen
- 20.1: Ringaufnahme
- 21: Drehmomenthülse
- 21.1: Federaufnahmering
- 22: Feststellring
- 22.1: Stufe
- 22.2: Bolzenführungen
- 23: Modusstellhülse
- 23.1: Innenverzahnung
- 23.2: Rastglied
- 23.3: Rastposition
- 23.4: Außenkontur
- 24: Lagerachse
- 25: Stellzahnrad
- 26: Rückführfeder
- 27: Rückführelement
- 27.1: Rückführverzahnung
- 28: Mitnahmering
- 29: Sperrgliedfeder
- 30: Spanngliedfeder
- 31: Antriebsbuchse
- 32: Werkzeugaufnahme
- 33: Abdeckklappe
- 34: Lager
- 35: Bolzenlager

## Patentansprüche

1. Bohrvorrichtung mit einer Bohrmaschine, die ein Maschinengehäuse (1) und eine mittels eines Motors (2) antreibbare Maschinenspindel (3) aufweist, und mit einem Bohrfutter mit einem Futterkörper (4), in dem mittels einer zwischen einem Mitnehmer (5) und einer Gewindehülse (6) ausgebildeten Gewindeverbindung (7) verstellbare Spannbacken (8) geführt sind, mit einer Bohrspindel (9) und einem axial verstellbaren Antriebsbolzen (10), der durch den Motor (2) auf seiner der Maschinenspindel (3) zugewandten Seite über ein Planetengetriebe (11) bestehend aus einem Sonnenrad (12), einem Planetenräder (13) tragenden Planetenträger (14) und einem Hohlrad (15) antreibbar ist, und mit einem Stellglied (16), wobei das Hohlrad (15) auf seiner der Maschinenspindel (3) abgewandten Seite eine Stirnnocken (15.2) aufweisende Stirnseite (15.3) besitzt, zum Zusammenwirken mit mindestens einem Kupplungsbolzen (20), wobei außerdemein Sperrglied (17) und ein Spannglied (18) parallel zur Kraftübertragungskette des Antriebsbolzens (10) vorgesehen sind, welche drehfest mit dem Maschinengehäuse (1) verbunden und durch Verstellung des Stellglieds (16) zwischen den Betriebsmodi axial verstellbar sind, für die Variation des auf den Antriebsbolzen (10) wirkenden Drehmoments, **dadurch gekennzeichnet, dass** das Hohlrad (15) zur drehmomentabhängig drehfesten Lagerung gegenüber dem Maschinengehäuse (1) durch eine auf seiner der Maschinenspindel (3) zugewandten Seite vorgesehene Hohlradfeder (15.4) abgestützt ist.

2. Bohrvorrichtung nach einem der Anspruch 1, **dadurch gekennzeichnet, dass** das Hohlrad (15) mindestens eine Sperrstegaufnahme (15.1) für mindestens einen Sperrsteg (17.1) des Sperrglieds (17) aufweist.

3. Bohrvorrichtung nach Anspruch 2, **dadurch gekennzeichnet, dass** im Betriebsmodus "Bohren" durch die axiale Verstellung des Sperrglieds (17) zur drehfesten Lagerung des Hohlrads (15) gegenüber dem Maschinengehäuse (1) der mindestens eine Sperrsteg (17.1) in die mindestens eine Sperrstegaufnahme (15.1) des Hohlrades (15) eingerückt ist.

4. Bohrvorrichtung nach Anspruch 2, **dadurch gekennzeichnet, dass** in den Betriebsmodi "Schrauben" und "Spannen / Lösen" durch die axiale Verstellung des Sperrglieds (17) der mindestens einen Sperrsteg (17.1) aus der mindestens einen Sperrstegaufnahme (15.1) ausgerückt ist.

5. Bohrvorrichtung nach einem der Ansprüche 1 bis 4, **dadurch gekennzeichnet, dass** der mindestens eine Kupplungsbolzen (20) mit einer Drehmomentfeder (19) beaufschlagt ist und zur drehmomentabhängig drehfesten Lagerung des Hohlrads (15) gegenüber dem Maschinengehäuse (1) an die Stirnseite (15.3) des Hohlrads (15) angepresst ist.

6. Bohrvorrichtung nach Anspruch 5, **dadurch gekennzeichnet, dass** eine Drehmomenthülse (21) zur Einstellung der Kompression der Drehmomentfeder (19) vorgesehen ist.

7. Bohrvorrichtung nach Anspruch 6, **dadurch gekennzeichnet, dass** die Drehmomentfeder (19) auf ihrer der Maschinenspindel (3) abgewandten Seite durch einen mittels der Drehmomenthülse (21) axial verstellbaren Federaufnahmering (21.1) abgestützt ist.

8. Bohrvorrichtung nach einem der Ansprüche 1 bis 7, **dadurch gekennzeichnet, dass** das Stellglied (16) eine der Durchführung des Antriebsbolzens (10) dienende Stellgliedbolzendurchführung (16.1), mindestens ein mit mindestens einer am Sperrglied (17) vorgesehenen Sperrgliedsteuerkurve (17.2) wechselwirkendes Sperrsteuerglied (16.2) und mindestens ein mit mindestens einer am Spannglied (18) vorgesehenen Spanngliedsteuerkurve (18.1) wechselwirkendes Spannsteuerglied (16.3) aufweist.

9. Bohrvorrichtung nach Anspruch 8, **dadurch gekennzeichnet, dass** das mindestens eine Sperrsteuerglied (16.2) gegenüber dem mindestens einen Spannsteuerglied (16.3) radial in Bezug zum Antriebsbolzen (10) versetzt ist.

10. Bohrvorrichtung nach einem der Ansprüche 1 bis 9, **dadurch gekennzeichnet, dass** das Spannglied (18) eine der Durchführung des Antriebsbolzens (10) dienende Spanngliedbolzendurchführung (18.2), eine eine Spanngliedaußenverzahnung (18.3) aufweisende Spanngliedextension (18.4), und mindestens ein Spanngliedführungsmittel (18.5) aufweist.

11. Bohrvorrichtung nach einem der Ansprüche 1 bis 10, **dadurch gekennzeichnet, dass** das Sperrglied (17) eine der Durchführung des Antriebsbolzens (10) dienende Sperrgliedbolzendurchführung (17.4), mindestens eine Spanngliedführung (17.5) und mindestens eine Sperrgliedlauffläche (17.3) aufweist.

12. Bohrvorrichtung nach Anspruch 1 bis 11, **dadurch gekennzeichnet, dass** im Betriebsmodus "Spannen / Lösen" durch die axiale Verstellung des Spannglieds (18) ein Formschluss zwischen dem Spannglied (18) und der Bohrspindel (9) wirksam und diese dadurch drehfest mit dem Maschinengehäuse (1) verbunden ist, und dass der Antriebsbolzen (10) durch eine Mitnahme durch das Spannglied (18) formschlüssig mit der Gewindehülse (6) verbunden ist.

13. Bohrvorrichtung nach einem der Ansprüche 5 bis 11, **dadurch gekennzeichnet, dass** im Betriebsmodus "Spannen / Lösen" durch die axiale Verstellung des Spannglieds (18) ein Formschluss zwischen dem Spannglied (18) und der Bohrspindel (9) wirksam und diese dadurch drehfest mit dem Maschinengehäuse (1) verbunden ist, dass der Antriebsbolzen (10) durch eine Mitnahme durch das Spannglied (18) formschlüssig mit der Gewindehülse (6) verbunden ist, und dass ein Feststellring (22) zur axialen Lagesicherung des mindestens einen an der Stirnseite (15.3) angepressten Kupplungsbolzens (20) vorgesehen ist.

14. Bohrvorrichtung nach Anspruch 13, **dadurch gekennzeichnet, dass** die Hohlradfeder (15.4) axial rückwärtig auf der der Maschinenspindel (3) zugewandten Seite durch eine am Maschinengehäuse (1) ausgebildete Sicherungsschulter oder durch einen Sicherungsring (15.5) abgestützt ist.

15. Bohrvorrichtung nach einem der Ansprüche 1 bis 14, **dadurch gekennzeichnet, dass** das Stellglied (16) mittels einer Modusstellhülse (23) verstellbar ist.

16. Bohrvorrichtung nach Anspruch 15, **dadurch gekennzeichnet, dass** die Modusstellhülse (23) eine Innenverzahnung (23.1) und das Stellglied (16) eine Stellverzahnung (16.4) aufweisen, welche über ein auf einer Lagerachse (24) gelagertes Stellzahnrad (25) in wechselwirkendem Eingriff stehen.

17. Bohrvorrichtung nach Anspruch 15 oder 16, **dadurch gekennzeichnet, dass** die Modusstellhülse (23) mindestens drei den Betriebsmodi entsprechenden Rastpositionen (23.3) aufweist, in die mindestens ein am Maschinengehäuse (1) abgestütztes Rastglied (23.2) eingreifbar ist.

18. Bohrvorrichtung nach einem der Ansprüche 1 bis 17, **dadurch gekennzeichnet, dass** der Antriebsbolzen (10) auf der der Maschinenspindel (3) abgewandten Seite ein Stirnrad (10.1) aufweist, welches vorzugsweise als Stirnverzahnung (10.2) gebildet ist.

19. Bohrvorrichtung nach Anspruch 18, **dadurch gekennzeichnet, dass** am Stirnrad (10.1) ein mit einer Rückführfeder (26) beaufschlagtes Rückführelement (27) abgestützt ist.

20. Bohrvorrichtung nach Anspruch 18 oder 19, **dadurch gekennzeichnet, dass** das Rückführelement (27) eine Rückführverzahnung (27.1) aufweist, die vorzugsweise im Betriebsmodus "Spannen / Lösen" drehfest mit der Gewindehülse (6) verbunden und der Formschluss zur Spindelverzahnung (9.4) aufgehoben ist.

21. Bohrvorrichtung nach Anspruch 19 oder 20, **dadurch gekennzeichnet, dass** die Rückführfeder (26) an einem an der Gewindehülse (6) ausgebildeten Rückführkragen (6.1) abgestützt ist.

22. Bohrvorrichtung nach einem der Ansprüche 1 bis 21, **dadurch gekennzeichnet, dass** dem Antriebsbolzen (10) ein der Mitnahme durch Verstellung des Spannglieds (18) dienender Mitnahmering (28) zugeordnet ist.

23. Bohrvorrichtung nach einem der Ansprüche 1 bis 22, **dadurch gekennzeichnet, dass** der Antriebsbolzen (10) eine Mitnahmeschulter (10.3) und / oder eine Mitnahmerille (10.4) aufweist.

24. Bohrvorrichtung nach einem der Ansprüche 1 bis 23, **dadurch gekennzeichnet, dass** das Sperrglied (17)durch eine Sperrgliedfeder (29) und / oder das Spannglied (18) durch eine Spanngliedfeder (30) beaufschlagt sind.

25. Bohrvorrichtung nach einem der Ansprüche 1 bis 24, **dadurch gekennzeichnet, dass** die Bohrspindel (9) mehrteilig, vorzugsweise aus einer Maschinenhohlspindel (9.1) und einer mit dieser drehfest verbundenen Antriebshülse (9.2) gebildet ist.

26. Bohrvorrichtung nach einem der Ansprüche 1 bis 25, **dadurch gekennzeichnet, dass** formschlüssig mit dem Planetenträger (14) eine drehfest mit dem Antriebsbolzen (10) verbundene Antriebsbuchse vorgesehen ist.

## Claims

1. A drilling apparatus comprising a drilling machine which has a machine housing (1) and a machine spindle (3) drivable by means of a motor (2), and a drill chuck having a chuck body (4) in which clamping jaws (8) are guided, which are displaceable by means of a threaded connection (7) between an entrainment means (5) and a threaded sleeve (6), a drill spindle (9) and an axially displaceable drive pin (10) which is drivable by the motor on its side towards the machine spindle (3) by way of a planetary transmission (11) comprising a sun gear (12), a planet carrier (14) carrying planet gears (13) and a ring gear (15), and an adjusting member (16), wherein the ring gear (15) on its side remote from the machine spindle (3) has an end face (15.3) having face cams (15.2) for cooperation with at least one coupling pin (20), wherein in addition there are provided a locking member (17) and a clamping member (18) in parallel relationship with the power transmission train of the drive pin (10), which are non-rotatably connected to the machine housing (1) and are axially displaceable by displacement of the adjusting member (16) between the operating modes, for a variation in the torque acting on the drive pin (10), **characterised in that** for mounting with respect to the machine housing (1), non-rotatably in torque-dependent relationship, the ring gear (15) is supported by a ring gear spring (15.4) provided on its side facing towards the machine spindle (3).

2. A drilling apparatus according to claim 1 **characterised in that** the ring gear (15) has at least one locking leg receiving means (15.1) for at least one locking leg (17.1) of the locking member (17).

3. A drilling apparatus according to claim 2 **characterised in that** in the "drilling" operating mode the at least one locking leg (17.1) is engaged into the at least one locking leg receiving means (15.1) of the ring gear (15) by the axial displacement of the locking member (17) for non-rotatably mounting the ring gear (15) with respect to the machine housing (1).

4. A drilling apparatus according to claim 2 **characterised in that** in the "screwing" and "tightening/loosening" operating modes the at least one locking leg (17.1) is disengaged from the at least one locking leg receiving means (15.1) by the axial displacement of the locking member (17).

5. A drilling apparatus according to one of claims 1 to 4 **characterised in that** the at least one coupling pin (20) is acted upon by a torque spring (19) and is pressed against the end face (15.3) of the ring gear (15) for mounting the ring gear (15) with respect to the machine housing (1), non-rotatably in torque-dependent relationship.

6. A drilling apparatus according to claim 5 **characterised in that** there is provided a torque sleeve (21) for adjusting the compression of the torque spring (19).

7. A drilling apparatus according to claim 6 **characterised in that** on its side away from the machine spindle (3) the torque spring (19) is supported by a spring receiving ring (21.1) which is axially displaceable by means of the torque sleeve (21).

8. A drilling apparatus according to one of claims 1 to 7 **characterised in that** the adjusting member (16) has an adjusting member pin passage (16.1) serving for passing the drive pin (10) therethrough, at least one locking control member (16.2) interacting with at least one locking member control cam (17.2) on the locking member (17) and at least one clamping control member (16.3) interacting with at least one clamping member control cam (18.1) on the clamping member (18).

9. A drilling apparatus according to claim 8 **characterised in that** the at least one locking control member (16.2) is displaced relative to the at least one clamping control member (16.3) radially in relation to the drive pin (10).

10. A drilling apparatus according to one of claims 1 to 9 **characterised in that** the clamping member (18) has a clamping member pin passage (18.2) serving for the drive pin (10) to pass therethrough, a clamping member extension (18.4) having a clamping member external tooth arrangement (18.3) and at least one clamping member guide means (18.5).

11. A drilling apparatus according to one of claims 1 to 10 **characterised in that** the locking member (17) has a locking member pin passage (17.4) serving for the drive pin (10) to pass therethrough, at least one clamping member guide (17.5) and at least one locking member running surface (17.3).

12. A drilling apparatus according to claims 1 to 11 **characterised in that** in the "tightening/loosening" operating mode a positively locking connection is operative between the clamping member (18) and the drilling spindle (9) by the axial displacement of the clamping member (18) and the spindle is thereby non-rotatably connected to the machine housing (1) and the drive pin (10) is connected to the threaded sleeve (6) in positively locking relationship by entrainment by the clamping member (18).

13. A drilling apparatus according to claims 5 to 11 **characterised in that** in the "tightening/loosening" operating mode a positively locking connection is operative between the clamping member (18) and the drilling spindle (9) by the axial displacement of the clamping member (18) and the spindle is thereby non-rotatably connected to the machine housing (1), the drive pin (10) is connected to the threaded sleeve (6) in positively locking relationship by entrainment by the clamping member (18), and there is provided a fixing ring (22) for axial positional securing of the at least one coupling pin (20) which is pressed against the end face (15.3).

14. A drilling apparatus according to claim 13 **characterised in that** the ring gear spring (15.4) is supported axially rearwardly on the side towards the machine spindle (3) by a securing shoulder on the machine housing (1) or by a securing ring (15.5).

15. A drilling apparatus according to one of claims 1 to 14 **characterised in that** the adjusting member (16) is displaceable by means of mode setting sleeve (23).

16. A drilling apparatus according to claim 15 **characterised in that** the mode setting sleeve (23) has an internal tooth arrangement (23.1) and the adjusting member (16) has an adjusting tooth arrangement (16.4) which are in interacting engagement by way of an adjusting gear (25) mounted on a mounting shaft (24).

17. A drilling apparatus according to claim 15 or claim 16 **characterised in that** the mode setting sleeve (23) has at least three latching positions (23.3) which correspond to the operating modes and into which at least one latching member (23.2) supported on the machine housing (1) is engageable.

18. A drilling apparatus according to one of claims 1 to 17 **characterised in that** on the side remote from the machine spindle (3) the drive pin (10) has a spur gear (10.1) which is preferably in the form of a spur tooth arrangement (10.2).

19. A drilling apparatus according to claim 18 **characterised in that** a return element (27) acted upon by a return spring (26) is supported on the spur gear (10.1).

20. A drilling apparatus according to claim 18 or claim 19 **characterised in that** the return element (27) has a return tooth arrangement (27.1) which preferably in the "tightening/loosening" operating mode is connected non-rotatably to the threaded sleeve (6) and the positively locking engagement in relation to the spindle tooth arrangement (9.4) is released.

21. A drilling apparatus according to claim 19 or claim 20 **characterised in that** the return spring (27) is supported at a return collar (6.1) on the threaded sleeve (6).

22. A drilling apparatus according to one of claims 1 to 21 **characterised in that** associated with the drive pin (10) is an entrainment ring (28) serving for entrainment by displacement of the clamping member (18).

23. A drilling apparatus according to one of claims 1 to 22 **characterised in that** the drive pin (10) has an entrainment shoulder (10.3) and/or an entrainment groove (10.4).

24. A drilling apparatus according to one of claims 1 to 23 **characterised in that** the locking member (17) is acted upon by a locking member spring (29) and/or the clamping member (18) is acted upon by a clamping member spring (30).

25. A drilling apparatus according to one of claims 1 to 24 **characterised in that** the drilling spindle (9) is of a multi-part structure, preferably formed from a hollow machine spindle (9.1) and a drive sleeve (9.2) non-rotatably connected thereto.

26. A drilling apparatus according to one of claims 1 to 25 **characterised in that** there is provided a drive bush connected non-rotatably to the drive pin (10) in positively locking relationship with the planet carrier (14).

## Revendications

1. Dispositif de perçage comprenant une perceuse qui présente un carter de machine (1) et une broche de machine (3) pouvant être entraînée au moyen d'un moteur (2), et comprenant un mandrin porte-foret doté d'un corps de mandrin (4) dans lequel des mors de serrage (8) déplaçables sont guidés au moyen d'un assemblage par filetage (7) réalisé entre un élément d'entraînement (5) et une douille filetée (6), comprenant une broche de perçage (9) et un axe d'entraînement (10), déplaçable axialement, qui peut être entraîné par le moteur (2) sur son côté tourné vers la broche de machine (3), par l'intermédiaire d'un train planétaire (11), constitué d'un pignon planétaire (12), d'un porte-satellites (14) portant des pignons satellites (13) et d'une couronne (15), et comprenant un élément d'actionnement (16), la couronne (15) comportant, sur son côté éloigné de la broche de machine (3), une face frontale (15.3) dotée de cames frontales (15.2) destinées à coopérer avec au moins un axe d'accouplement (20), sachant qu'en outre, il est prévu, parallèlement à la chaîne de transmission de force de l'axe d'entraînement (10), un élément de blocage (17) et un élément de serrage (18) qui sont reliés de façon immobilisée en rotation au carter de machine (1) et peuvent être déplacés axialement entre les modes de fonctionnement par déplacement de l'élément d'actionnement (16), en vue de la variation du couple agissant sur l'axe d'entraînement (10), **caractérisé en ce que** la couronne (15) est en appui par l'intermédiaire d'un ressort de couronne (15.4) prévu sur son côté tourné vers la broche de machine (3), en vue du support immobilisé en rotation, dépendant du couple, par rapport au carter de machine (1).

2. Dispositif de perçage selon la revendication 1, **caractérisé en ce que** la couronne (15) présente au moins un logement de patte de blocage (15.1) pour au moins une patte de blocage (17.1) de l'élément de blocage (17).

3. Dispositif de perçage selon la revendication 2, **caractérisé en ce qu'**en mode "perçage", le déplacement axial de l'élément de blocage (17) a pour effet d'engager la patte de blocage (17.1), au nombre d'au moins une, dans le logement de patte de blocage (15.1), au nombre d'au moins un, de la couronne (15), en vue du support immobile en rotation de la couronne (15) par rapport au carter de machine (1).

4. Dispositif de perçage selon la revendication 2, **caractérisé en ce que**, dans les modes de fonctionnement "vissage" et "serrage/desserrage", le déplacement axial de l'élément de blocage (17) a pour effet de dégager la patte de blocage (17.1), au nombre d'au moins une, du logement de patte de blocage (15.1), au nombre d'au moins un.

5. Dispositif de perçage selon l'une des revendications 1 à 4, **caractérisé en ce que** l'axe d'accouplement (20), au nombre d'au moins un, est sollicité par un ressort de couple (19) et est pressé contre la face frontale (15.3) de la couronne (15), en vue du support immobile en rotation, dépendant du couple, par rapport au carter de machine (1).

6. Dispositif de perçage selon la revendication 5, **caractérisé en ce qu'**une douille de couple (21) est prévue pour le réglage de la compression du ressort de couple (19).

7. Dispositif de perçage selon la revendication 6, **caractérisé en ce que** le ressort de couple (19), sur son côté éloigné de la broche de machine (3), est en appui sur une bague de réception de ressort (21.1) pouvant être déplacée axialement au moyen de la douille de couple (21).

8. Dispositif de perçage selon l'une des revendications 1 à 7, **caractérisé en ce que** l'élément d'actionnement (16) présente un passage d'axe d'élément d'actionnement (16.1) servant au passage de l'axe d'entraînement (10), au moins un élément de commande de blocage (16.2) en interaction avec au moins une came de commande d'élément de blocage (17.2) prévue sur l'élément de blocage (17), et au moins un élément de commande de serrage (16.3) en interaction avec une came de commande d'élément de serrage (18.1) prévue sur l'élément de serrage (18).

9. Dispositif de perçage selon la revendication 8, **caractérisé en ce que** l'élément de commande de blocage (16.2), au nombre d'au moins un, est décalé par rapport à l'élément de commande de serrage (16.3), au nombre d'au moins un, radialement par rapport à l'axe d'entraînement (10).

10. Dispositif de perçage selon l'une des revendications 1 à 9, **caractérisé en ce que** l'élément de serrage (18) présente un passage d'axe d'élément de serrage (18.2) servant au passage de l'axe d'entraînement (10), un prolongement d'élément de serrage (18.4) doté d'une denture extérieure d'élément de serrage (18.3), et au moins un moyen de guidage d'élément de serrage (18.5).

11. Dispositif de perçage selon l'une des revendications 1 à 10, **caractérisé en ce que** l'élément de blocage (17) présente un passage d'axe d'élément de blocage (17.4) servant au passage de l'axe d'entraînement (10), au moins un guide d'élément de serrage (17.5) et au moins une surface de contact d'élément de blocage (17.3).

12. Dispositif de perçage selon la revendication 1 à 11, **caractérisé en ce qu'**en mode "serrage/desserrage", le déplacement axial de l'élément de serrage (18) a pour effet qu'un accouplement mécanique est actif entre l'élément de serrage (18) et la broche de perçage (9) et que cette dernière est de ce fait immobilisée en rotation sur le carter de machine (1), et **en ce que** l'axe d'entraînement (10) est accouplé mécaniquement à la douille filetée (6) du fait d'un entraînement par l'élément de serrage (18).

13. Dispositif de perçage selon l'une des revendications 5 à 11, **caractérisé en ce qu'**en mode "serrage/desserrage", le déplacement axial de l'élément de serrage (18) a pour effet qu'un accouplement mécanique est actif entre l'élément de serrage (18) et la broche de perçage (9) et que cette dernière est de ce fait immobilisée en rotation sur le carter de machine (1), **en ce que** l'axe d'entraînement (10) est accouplé mécaniquement à la douille filetée (6) du fait d'un entraînement par l'élément de serrage (18), et **en ce qu'**il est prévu une bague de verrouillage (22) pour le maintien en position axiale de l'axe d'accouplement (20), au nombre d'au moins un, pressé contre la face frontale (15.3).

14. Dispositif de perçage selon la revendication 13, **caractérisé en ce que** le ressort de couronne (15.4) est en appui axial arrière, sur le côté tourné vers la broche de machine (3), à l'aide d'un épaulement de retenue ou à l'aide d'une bague de retenue (15.5) formé(e) sur le carter de machine (1).

15. Dispositif de perçage selon l'une des revendications 1 à 14, **caractérisé en ce que** l'élément d'actionnement (16) peut être déplacé au moyen d'une douille de réglage de mode (23).

16. Dispositif de perçage selon la revendication 15, **caractérisé en ce que** la douille de réglage de mode (23) présente une denture intérieure (23.1) et l'élément d'actionnement (16) présente une denture d'actionnement (16.4), qui sont en engrènement interactif par l'intermédiaire d'une roue dentée d'actionnement (25) montée sur un axe de support (24).

17. Dispositif de perçage selon la revendication 15 ou 16, **caractérisé en ce que** la douille de réglage de mode (23) présente au moins trois positions d'encliquetage (23.3) qui correspondent aux modes de fonctionnement et dans lesquelles peut s'engager au moins un élément d'encliquetage (23.2) prenant appui sur le carter de machine (1).

18. Dispositif de perçage selon l'une des revendications 1 à 17, **caractérisé en ce que** l'axe d'entraînement (10) présente, sur le côté éloigné de la broche de machine (3), une roue dentée droite (10.1) qui est de préférence réalisée sous forme de denture droite (10.2).

19. Dispositif de perçage selon la revendication 18, **caractérisé en ce qu'**un élément de retour (27), sollicité par un ressort de retour (26), est en appui sur la roue dentée droite (10.1).

20. Dispositif de perçage selon la revendication 18 ou 19, **caractérisé en ce que** l'élément de retour (27) présente une denture de retour (27.1) qui, en mode "serrage/desserrage", est de préférence liée à la douille filetée (6), de manière à être immobilisée en rotation, et que l'accouplement mécanique avec la denture de broche (9.4) est neutralisé.

21. Dispositif de perçage selon la revendication 19 ou 20, **caractérisé en ce que** le ressort de retour (26) est en appui sur un collet de retour (6.1) formé sur la douille filetée (6).

22. Dispositif de perçage selon l'une des revendications 1 à 21, **caractérisé en ce qu'**une bague d'entraînement (28), servant à l'entraînement par déplacement de l'élément de serrage (18), est associée à l'axe d'entraînement (10).

23. Dispositif de perçage selon l'une des revendications 1 à 22, **caractérisé en ce que** l'axe d'entraînement (10) présente un épaulement d'entraînement (10.3) et/ou une rainure d'entraînement (10.4).

24. Dispositif de perçage selon l'une des revendications 1 à 23, **caractérisé en ce que** l'élément de blocage (17) est sollicité par un ressort d'élément de blocage (29) et/ou l'élément de serrage (18) est sollicité par un ressort d'élément de serrage (30).

25. Dispositif de perçage selon l'une des revendications 1 à 24, **caractérisé en ce que** la broche de perçage (9) est formée de plusieurs parties, de préférence d'une broche de machine creuse (9.1) et d'une douille d'entraînement (9.2) solidaire en rotation de celle-ci.

26. Dispositif de perçage selon l'une des revendications 1 à 25, **caractérisé en ce qu'**il est prévu une douille d'entraînement qui est solidaire en rotation de l'axe d'entraînement (10) et est accouplée mécaniquement au porte-satellites (14).
